# EUROPEAN PATENT SPECIFICATION

(11) **EP 3 247 088 B1**
(45) Date of publication and mention of the grant of the patent: **30.12.2020**
(21) Application number: 15880734.7
(22) Date of filing: 05.02.2015
(51) Int. Cl.: H04L 29/08

(54) **M2M DATA PROCESSING METHODS AND DEVICES**
M2M-DATENVERARBEITUNGSVERFAHREN UND -VORRICHTUNGEN
PROCÉDÉS ET DISPOSITIFS DE TRAITEMENT DE DONNÉES M2M

(43) Date of publication of application: 22.11.2017
(73) Proprietor: Huawei Technologies Co., Ltd., Longgang District Shenzhen, Guangdong 518129 (CN); University Of Electronic Science And Technology Of China, Chengdu, Sichuan 610054 (CN)
(72) Inventor: HU, Xuemei, Sichuan 610054 (CN); XU, Yang, Sichuan 610054 (CN); LI, Yan, Sichuan 610054 (CN)
(74) Representative: Thun, Clemens
(86) International application number: PCT/CN2015/072320
(87) International publication number: WO 2016/123778

(56) References cited:
- CN-A- 102 158 551
- CN-A- 102 281 584
- CN-A- 103 095 823
- US-A1- 2014 280 671
- US-A1- 2014 310 398
- KNUTH D E: "Sorting and Searching, PASSAGE", SORTING AND SEARCHING, XX, XX, vol. 3, 1 January 1973 (1973-01-01), pages 550-557, XP002374954,

## Description

### TECHNICAL FIELD

The present invention relates to the field of communications, and in particular, to an M2M data processing method, device, and system.

### BACKGROUND

A machine-to-machine (English: Machine to Machine, M2M for short) technology is a networked application technology using intelligent interaction between machines as a core. With development of the M2M technology, higher requirements are imposed on various capabilities of an M2M device in M2M communications.

In an existing M2M system, a newly-added M2M device first needs to send a registration request to an M2M service platform. The registration request includes capability information for describing various capabilities of the M2M device. When determining that the M2M device can register with the M2M service platform, the M2M service platform stores, in a corresponding database, a correspondence between an identifier of the M2M device and the capability information of the M2M device. When an M2M device on which an application program (app) is installed sends a query request to the M2M service platform, the M2M service platform sequentially queries, according to a query condition (such as a condition of meeting a preset capability) carried in the query request, correspondences that are recorded in the database and that are between identifiers of M2M devices and capability information of various capabilities of the M2M devices, so as to obtain a device that meets the query condition.

For example, US 2014/0280671A1 refers to a specification for an internet enabled device or application, the specification comprises one or more functional interfaces, defining attributes or operating characteristics of said device or application, and said specification defines the overall capabilities of said device or application. A functional interface, which defines attributes or operating characteristics of said device or application, as well as a central storage repository for use in a network wherein said central storage repository stores a specification for each device and/or application and/or the at least one server the specification is comprised of one or more functional interfaces, and said central repository is easily accessible and a method of enabling communication between devices and/or applications and/or a server within a network the network comprising at least one client device and/or client application and at least one server.

However, in the existing M2M system, the M2M service platform stores, in a corresponding sub-database, the correspondences between identifiers of M2M devices and capability information of the M2M devices. As a result, during a query, massive data queries need to be performed on capability information that is of all capabilities and that is stored in the database. Therefore, a query latency is relatively long, and hardware resources of the M2M service platform are wasted.

### SUMMARY

The present invention provides M2M data processing methods in accordance with claims 1 and 6, an M2M service platform in accordance with claim 8, and an M2M device in accordance with claim9, so as to resolve a problem that a query latency is relatively long and hardware resources of the M2M service platform are wasted. A capability model includes three types of capabilities: a communication capability, a control capability, and a measurement capability, and each capability is divided into multiple subentries according to a preset rule. Therefore, a filled capability model obtained according to the capability model and capability information of an M2M device is also divided in a type division manner of the capability model; and an overall capability model updated by using the filled capability model is also divided in the type division manner of the capability model. In this case, a query may be performed by the type without massive data queries. Therefore, a query latency and waste of hardware resources of an M2M service platform are reduced.

It should be understood that general description above and detailed description below are merely examples and explanatory, and do not limit the present invention.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic structural diagram of an M2M data processing system related in an M2M data processing method according to an embodiment of the present invention;
FIG. 2 is a flowchart of an M2M data processing method according to an embodiment of the present invention;
FIG. 3A and FIG. 3B are a flowchart of another M2M data processing method according to an embodiment of the present invention;
FIG. 4 is a schematic structural diagram of a capability model according to an embodiment of the present invention;
FIG. 5 is a schematic structural diagram of a capability model of an M2M data processing system in a OneM2M environment according to an embodiment of the present invention;
FIG. 6A and FIG. 6B are a schematic structural diagram of a filled capability model according to an embodiment of the present invention;
FIG. 7 is a schematic structural diagram of a capability field model according to an embodiment of the present invention;
FIG. 8 is a flowchart of a method for determining a to-be-queried device according to an embodiment of the present invention;
FIG. 9 is a schematic structural diagram of an M2M data processing device according to an example of an embodiment of the present invention;
FIG. 10 is a schematic structural diagram of an obtaining unit according to an example of an embodiment of the present invention;
FIG. 11 is a schematic structural diagram of another obtaining unit according to an example of an embodiment of the present invention;
FIG. 12 is a schematic structural diagram of another M2M data processing device according to an example of an embodiment of the present invention;
FIG. 13 is a schematic structural diagram of a first querying unit according to an example of an embodiment of the present invention;
FIG. 14 is a schematic structural diagram of still another M2M data processing device according to an example of an embodiment of the present invention;
FIG. 15 is a schematic structural diagram of an M2M data processing device according to another example of an embodiment of the present invention;
FIG. 16 is a schematic structural diagram of another M2M data processing device according to another example of an embodiment of the present invention;
FIG. 17 is a schematic structural diagram of still another M2M data processing device according to another example of an embodiment of the present invention;
FIG. 18 is a schematic structural diagram of yet another M2M data processing device according to another example of an embodiment of the present invention;
FIG. 19 is a schematic structural diagram of an M2M data processing device according to still another example of an embodiment of the present invention; and
FIG. 20 is a schematic structural diagram of an M2M data processing device according to yet another example of an embodiment of the present invention.

Specific embodiments of the present invention have been shown in the foregoing accompanying drawings, and more detailed description is provided below. These accompanying drawings and text description are not for limiting the protection scope of the present invention in any manner but describe the concept of the present invention to a skilled person in the art with reference to the specific embodiments.

### DESCRIPTION OF EMBODIMENTS

To make the objectives, technical solutions, and advantages of the present invention clearer, the following further describes the embodiments of the present invention in detail with reference to the accompanying drawings.

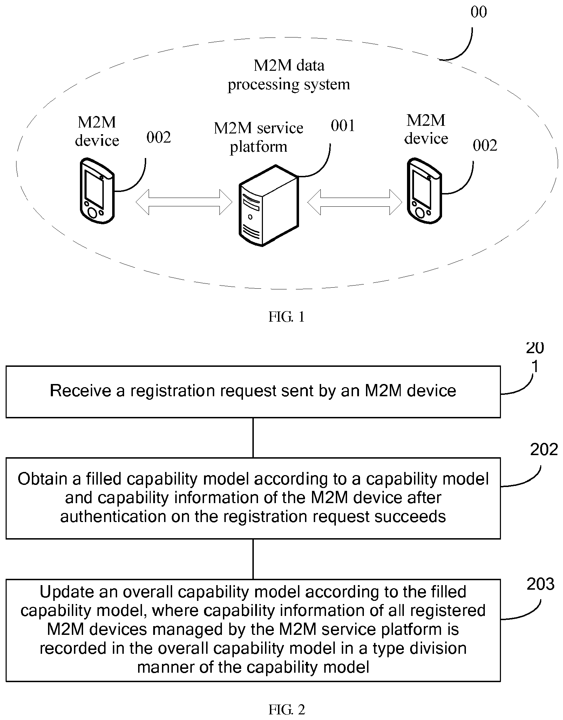

FIG. 1 shows a schematic structural diagram of an M2M data processing system 00 related in an M2M data processing method according to an embodiment of the present invention. The M2M data processing system 00 uses an M2M technology. The M2M technology is a networked application technology whose core is intelligent interaction between machines. The M2M data processing system organically combines different types of communications technologies by using the M2M technology, so as to implement communication between machines. The M2M data processing system 00 includes an M2M service platform (Service Platform) 001 and at least two M2M devices 002. The at least two M2M devices 002 include at least one M2M device on which an application program is installed. The M2M service platform is configured to manage all M2M devices in the M2M data processing system. The M2M device on which the application program is installed has a device query function and a control function.

The M2M devices 002 may be machine devices such as a cell phone, a phone, a computer, and a fax machine. The M2M device on which the application program is installed may send a query request and a control command to the M2M service platform 001. The control command may be sent to a corresponding destination M2M device by using the M2M service platform, so as to control the destination M2M device to perform an action instructed by the control command, for example, temperature adjustment and humidity measurement.

An existing International Organization for Standardization, OneM2M, is devoted to put forward an M2M system based on an M2M application technology. In a OneM2M environment, the M2M service platform 001 in the M2M data processing system shown in FIG. 1 is a common service entity (English: Common Service Entity, CSE for short). The CSE is an entity that includes a group of common service function (English: Common Service Function, CSF for short) modules specified in the OneM2M environment. The CSE is configured to manage all M2M devices in the M2M data processing system and can implement communication between the M2M device on which the application program is installed and the destination M2M device.

An embodiment of the present invention provides an M2M data processing method, where the method is applied to an M2M service platform. As shown in FIG. 2, the method includes the following steps.

Step 201: Receive a registration request sent by an M2M device.

Step 202: Obtain a filled capability model according to a capability model and capability information of the M2M device after authentication on the registration request succeeds.

The capability model (CapabilityModel) includes three types of capabilities: a communication capability, a control capability, and a measurement capability. Each capability is divided into multiple subentries according to a preset rule. The filled capability model describes at least one subentry corresponding to a communication capability, a control capability, and a measurement capability of the M2M device.

Step 203: Update an overall capability model according to the filled capability model, where capability information of all registered M2M devices managed by the M2M service platform is recorded in the overall capability model in a type division manner of the capability model.

In conclusion, according to the M2M data processing method provided in this embodiment of the present invention, a capability model includes three types of capabilities: a communication capability, a control capability, and a measurement capability, and each capability is divided into multiple subentries according to a preset rule. Therefore, a filled capability model obtained according to the capability model and capability information of an M2M device is also divided in a type division manner of the capability model; and an overall capability model updated by using the filled capability model is also divided in the type division manner of the capability model. In this case, a query may be performed by the type without massive data queries. Therefore, a query latency and waste of hardware resources of an M2M service platform are reduced.

In one aspect, the M2M device may fill the capability model, and step 202 may include: sending the capability model to the M2M device, so that the M2M device fills the capability model according to the capability information of the M2M device to obtain the filled capability model; and receiving the filled capability model sent by the M2M device.

Particularly, the registration request in step 201 may include: a model filling capability identifier, the model filling capability identifier is used to indicate whether the M2M device has a model filling capability, and the sending the capability model to the M2M device may include: determining, according to the model filling capability identifier, whether the M2M device has the model filling capability; and sending the capability model to the M2M device if the M2M device has the model filling capability.

In another aspect, the M2M service platform may fill the capability model. Generally, the M2M service platform fills the capability model only when the M2M device does not have a model filling function. The registration request in step 201 may include the capability information of the M2M device, and step 202 may include: filling, by the M2M service platform, the capability model with the capability information of the M2M device to obtain the filled capability model.

Further, after step 203, the M2M device on which an application program is installed may further query a destination M2M device, and a specific method includes: receiving a query condition sent by the application program, where the application program is installed on the M2M device; searching the overall capability model according to the query condition, and using a device that meets the query condition as a to-be-queried device; and sending an identifier of the to-be-queried device to the application program.

It should be noted that a subentry of each capability in a communication capability, a control capability, and a measurement capability in the overall capability model includes a type subentry and at least one data subentry. The type subentry is used to describe a semantic meaning of each capability, and the at least one data subentry is used to describe a practical meaning of each capability. A capability field model is established on the M2M service platform, and the capability field model describes a capability category of each capability in the communication capability, the control capability, and the measurement capability. A described type subentry of a subentry of each capability in the overall capability model is associated with a capability category of a corresponding capability in the capability field model. The query condition includes a capability category of at least one capability in the communication capability, the control capability, and the measurement capability. For example, a type subentry of the communication capability in the overall capability model is a communication type subentry, and at least one data subentry of the communication capability in the overall capability model includes: a communication medium subentry, a communication range subentry, a communication manner subentry, and a communication protocol subentry; and a type subentry of the control capability in the overall capability model is a control type subentry, a data subentry of the control capability in the overall capability model describes control commands corresponding to all the registered M2M devices, and each control command includes next-level subentries such as a command description subentry, a method subentry, a uniform resource identifier (English: Uniform Resource Identifier, URI for short) subentry, and a parameter subentry.

Correspondingly, the searching the overall capability model according to the query condition, and using a device that meets the query condition as a to-be-queried device may include:
querying, according to the query condition, a capability category that is in the capability field model and indicated by the query condition; searching, according to the capability category indicated by the query condition, the overall capability model for a type subentry that is associated with the capability category indicated by the query condition, and using the type subentry as a to-be-queried type subentry; and searching the overall capability model according to the to-be-queried type subentry, and using, as the to-be-queried device, a device on which the to-be-queried type subentry is described.

Further, the data subentry in the control capability in the overall capability model describes the control commands corresponding to all the registered M2M devices, and after the identifier of the to-be-queried device is sent to the application program, the M2M device on which the application program is installed may further perform control over the target M2M device, and a specific method may include:
receiving control information sent by the application program, where the control information includes an identifier of a target M2M device and an instruction parameter, and the target M2M device is selected by the application program from the device corresponding to the identifier of the to-be-queried device; querying the at least one data subentry in the control capability in the overall capability model according to the identifier of the target M2M device to obtain a control command corresponding to the target M2M device; generating a target control command according to the instruction parameter and the control command; sending the target control command to the target M2M device according to the identifier of the target M2M device, so that the target M2M device performs an action instructed by the target control command and generates feedback data; receiving the feedback data sent by the target M2M device; and sending the feedback data to the application program.

In conclusion, according to the M2M data processing method provided in this embodiment of the present invention, a capability model includes three types of capabilities: a communication capability, a control capability, and a measurement capability, and each capability is divided into multiple subentries according to a preset rule. Therefore, a filled capability model obtained according to the capability model and capability information of an M2M device is also divided in a type division manner of the capability model; and an overall capability model updated by using the filled capability model is also divided in the type division manner of the capability model. In this case, a query may be performed by the type without massive data queries. Therefore, a query latency and waste of hardware resources of an M2M service platform are reduced.

An embodiment of the present invention provides an M2M data processing method, where the method is applied to an M2M device, and includes:
sending a registration request to an M2M service platform, so that the M2M service platform obtains a filled capability model according to a capability model and capability information of the M2M device after authentication on the registration request succeeds, and updates an overall capability model according to the filled capability model.

The capability model includes three types of capabilities: a communication capability, a control capability, and a measurement capability, and each capability is divided into multiple subentries according to a preset rule. The filled capability model describes at least one subentry corresponding to a communication capability, a control capability, and a measurement capability of the M2M device. Capability information of all registered M2M devices managed by the M2M service platform is recorded in the overall capability model in a type division manner of the capability model.

In conclusion, according to the M2M data processing method provided in this embodiment of the present invention, a capability model includes three types of capabilities: a communication capability, a control capability, and a measurement capability, and each capability is divided into multiple subentries according to a preset rule. Therefore, a filled capability model obtained according to the capability model and capability information of an M2M device is also divided in a type division manner of the capability model; and an overall capability model updated by using the filled capability model is also divided in the type division manner of the capability model. In this case, a query may be performed by the type without massive data queries. Therefore, a query latency and waste of hardware resources of an M2M service platform are reduced.

In one aspect, the M2M device may fill the capability model. After the registration request is sent to the M2M service platform, the M2M device may further receive the capability model sent by the M2M service platform, fill the capability model according to the capability information of the M2M device to obtain the filled capability model, and send the filled capability model to the M2M service platform.

Particularly, the registration request may include a model filling capability identifier, and the model filling capability identifier is used to indicate whether the M2M device has a model filling capability. In this way, the M2M service platform may determine, according to the model filling capability identifier, whether the M2M device has the model filling capability, and send the capability model to the M2M device if the M2M device has the model filling capability.

In another aspect, the M2M service platform may fill the capability model. Generally, the M2M service platform fills the capability model only when the M2M device does not have a model filling function, and the registration request includes the capability information of the M2M device. The M2M service platform fills the capability model with the capability information of the M2M device to obtain the filled capability model.

Further, an application program may be installed on the M2M device. After the registration request is sent to the M2M service platform, the M2M device on which the application program is installed may further query a destination M2M device. A specific method includes: sending a query condition to the M2M service platform by using the application program, so that the M2M service platform searches the overall capability model according to the query condition, uses a device that meets the query condition as a to-be-queried device, and sends an identifier of the to-be-queried device to the application program.

It should be noted that a subentry of each capability in a communication capability, a control capability, and a measurement capability in the overall capability model includes a type subentry and at least one data subentry. The type subentry is used to describe a semantic meaning of each capability, and the at least one data subentry is used to describe a practical meaning of each capability. A capability field model is established on the M2M service platform, and the capability field model describes a capability category of each capability in the communication capability, the control capability, and the measurement capability. A described type subentry of a subentry of each capability in the overall capability model is associated with a capability category of a corresponding capability in the capability field model. The query condition includes a capability category of at least one capability in the communication capability, the control capability, and the measurement capability. For example, a type subentry of the communication capability in the overall capability model is a communication type subentry, and at least one data subentry of the communication capability in the overall capability model includes: a communication medium subentry, a communication range subentry, a communication manner subentry, and a communication protocol subentry; and a type subentry of the control capability in the overall capability model is a control type subentry, at least one data subentry in the control capability in the overall capability model may describe the control commands corresponding to all the registered M2M devices, and each control command includes next-level subentries such as a command description subentry, a method subentry, a URI subentry, and a parameter subentry.

Further, the data subentry in the control capability in the overall capability model describes control commands corresponding to all the registered M2M devices, and after the identifier that is of the to-be-queried device and sent by the M2M service platform is received, the M2M device on which the application program is installed may further perform control over a target M2M device, and a specific method may include: selecting a target M2M device from the device corresponding to the identifier of the to-be-queried device; sending control information to the M2M service platform, where the control information includes an identifier of the target M2M device and an instruction parameter, so that the M2M service platform queries the at least one data subentry in the control capability in the overall capability model according to the identifier of the target M2M device to obtain a control command corresponding to the target M2M device, generates a target control command according to the instruction parameter and the control command, and sends the target control command to the target M2M device according to the identifier of the target M2M device; and receiving feedback data sent by the M2M service platform, where after the target M2M device performs an action instructed by the target control command, the feedback data is generated and sent to the M2M service platform.

In conclusion, according to the M2M data processing method provided in this embodiment of the present invention, a capability model includes three types of capabilities: a communication capability, a control capability, and a measurement capability, and each capability is divided into multiple subentries according to a preset rule. Therefore, a filled capability model obtained according to the capability model and capability information of an M2M device is also divided in a type division manner of the capability model; and an overall capability model updated by using the filled capability model is also divided in the type division manner of the capability model. In this case, a query may be performed by the type without massive data queries. Therefore, a query latency and waste of hardware resources of an M2M service platform are reduced.

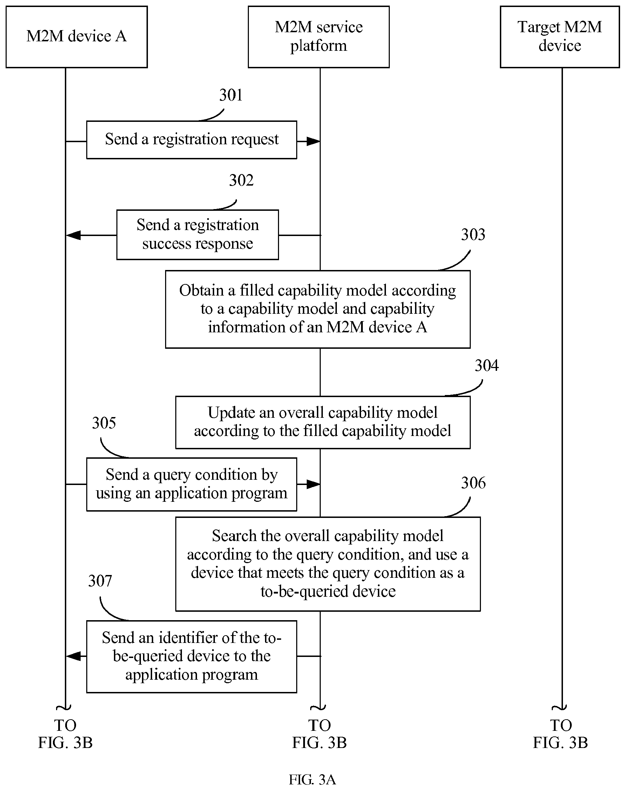

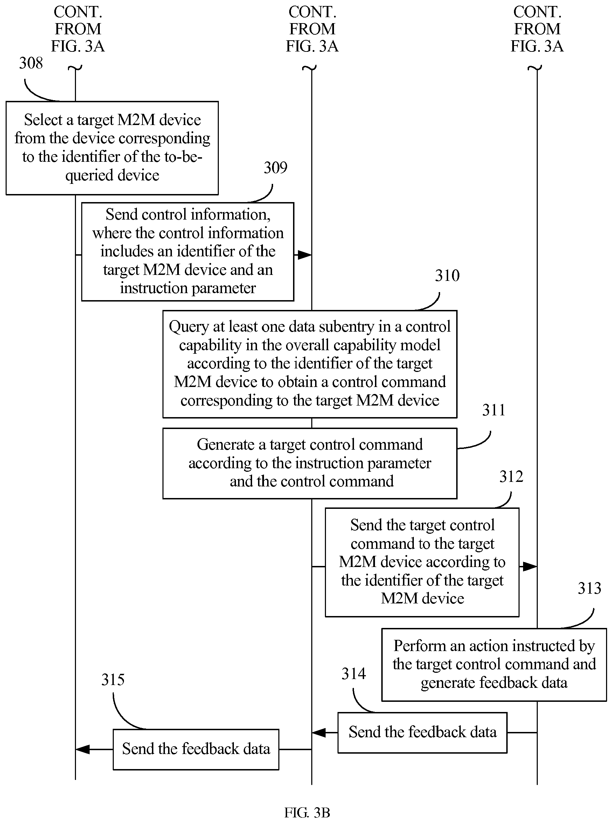

An embodiment of the present invention provides another M2M data processing method. It is assumed that an M2M data processing system includes an M2M device A, and an application program is installed on the M2M device A. The M2M device A is used as an example, and for a specific working process of another M2M device, on which an application program is installed, in the M2M data processing system, reference may be made to that of the M2M device A. As shown in FIG. 3A and FIG. 3B, the method includes the following steps.

Step 301: The M2M device A sends a registration request to an M2M service platform.

The M2M service platform in the M2M data processing system may manage all M2M devices in the M2M data processing system. When a new M2M device is added to the M2M data processing system, the new M2M device needs to register with the M2M service platform.

Step 302: The M2M service platform sends a registration success response to the M2M device A.

The registration request generally includes an identifier of the M2M device and the like. The M2M service platform processes the registration request, for example, performs authentication on the M2M device A according to the registration request. When determining that the M2M device A meets a registration condition, the M2M service platform may generate the registration success response, and send the registration success response to the M2M device A to notify the M2M device A that authentication on the registration request of the M2M device A succeeds. It should be noted that if the M2M service platform determines, after processing the registration request, that the M2M device A does not meet the registration condition, authentication on the registration request of the M2M device A fails. The M2M service platform may not respond to the registration request of the M2M device A, or generate a registration failure response and send the registration failure response to the M2M device A to notify the M2M device A that authentication on the registration request of the M2M device A fails.

Step 303. The M2M service platform obtains a filled capability model according to a capability model and capability information of the M2M device A.

In this embodiment of the present invention, a capability model is established on the M2M service platform, and the capability model is established according to a working mode of an M2M device, and existing working modes of the M2M device may include the following three types:
1. Measurement data obtaining mode: The M2M device sends an observation request to the M2M service platform, and the M2M service platform replies with measurement data.
   The working mode specifically includes: The M2M device sends the observation request to the M2M service platform, and the observation request instructs a target M2M device to measure a preset parameter. The M2M service platform sends the observation request to the target M2M device, and the target M2M device measures the preset parameter and forwards, to the M2M device, measurement data generated by the target M2M device.
2. Communications mode: Obtain a data transmission protocol and transmit data according to the protocol.
   The working mode specifically includes: A requesting party first sends a data transmission request to a receiving party, the receiving party replies to the requesting party with a specified data transmission protocol, and both parties start to transmit data according to the specified data transmission protocol.
3. Control mode: The M2M device sends control information to the M2M service platform, and the control information includes description of a control method. The M2M service platform sends, according to the control information, a control command to a device (that is, a target M2M device) that the M2M device expects to control.

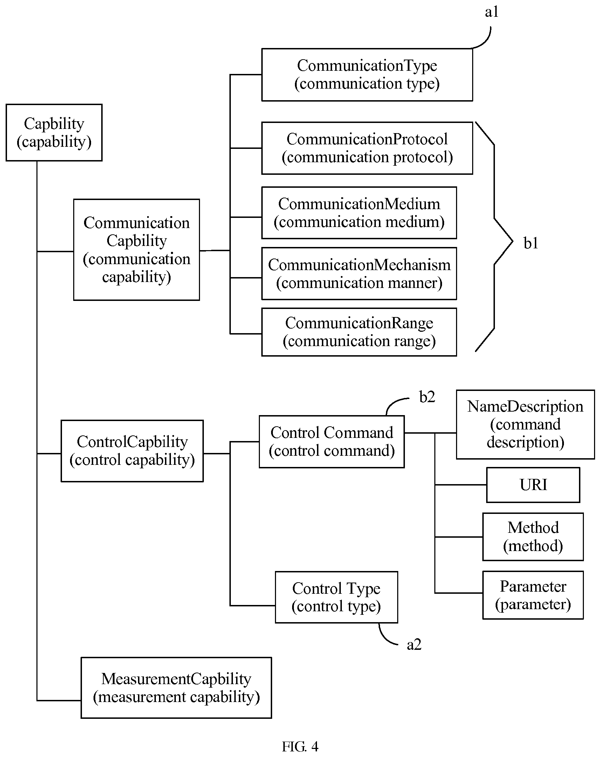

Correspondingly, as shown in FIG. 4, a capability in the capability model is divided into three types: a communication capability, a control capability, and a measurement capability. The communication capability is used to describe a feature of interaction between M2M devices. The execution capability is used to describe a feature of affecting an environment by an M2M device. The measurement capability is used to describe a measurement property of an M2M device.

Each capability in the communication capability, the control capability, and the measurement capability is divided into multiple subentries according to a preset rule. A subentry of each capability includes a type subentry and at least one data subentry, and each subentry may also include multiple next-level subentries. The type subentry is used to describe a semantic meaning (also referred to as a text meaning) of each capability, and the at least one data subentry is used to describe a practical meaning of each capability. For example, a type subentry a1 of the communication capability is a communication type (CommunicationType), and the communication type subentry indicates a type of the communication capability. At least one data subentry b1 of the communication capability includes: a communication medium (CommunicationMedium) subentry, a communication range (CommunicationRange) subentry, a communication manner (CommunicationMechanism) subentry, and a communication protocol (CommunicationProtocol) subentry. The communication medium subentry indicates a medium used for communication, for example, a wired medium, a wireless medium, or the like. The communication range subentry indicates a range in which communication can be performed, for example, a wide area or a local area. The communication manner subentry indicates a manner used for communication, for example, a simplex manner, a duplex manner, a half-duplex manner, or the like. The communication protocol subentry indicates a communication protocol used by the M2M device, for example, Wireless Fidelity (English: Wireless-Fidelity, WiFi for short), or the like.

For example, a type subentry a2 of the control capability is a control type (Control Type), and the control type subentry indicates type description of a control command. At least one data subentry b2 of the control capability describes a control command (Control Command), and each control command subentry includes next-level subentries such as a command description (NameDescription) subentry, a method (Method) subentry, a URI subentry, and a parameter (Parameter) subentry. The command description subentry indicates description of the control command. The method subentry indicates four operations: create (Create), read (Read), update (Update), and delete (Delete) of a representational state transfer (English: Representational State Transfer, REST for short) interface, or operations: get (get), put (put), post (post), and delete (delete) in the Hypertext Transfer Protocol (English, Hypertext transfer protocol, HTTP for short). The URI subentry indicates a URI of a device (that is, a target M2M device) on which the control command acts. The parameter subentry indicates a parameter carried by the control command.

Particularly, for the multiple subentries included in the measurement capability, reference may be made to description of semantic sensor network ontology put forward by the Semantic Sensor Network Incubator Group (English: The W3C Semantic Sensor Network Incubator group, the SSN-XG for short) in the prior art, and details are not described in this embodiment of the present invention.

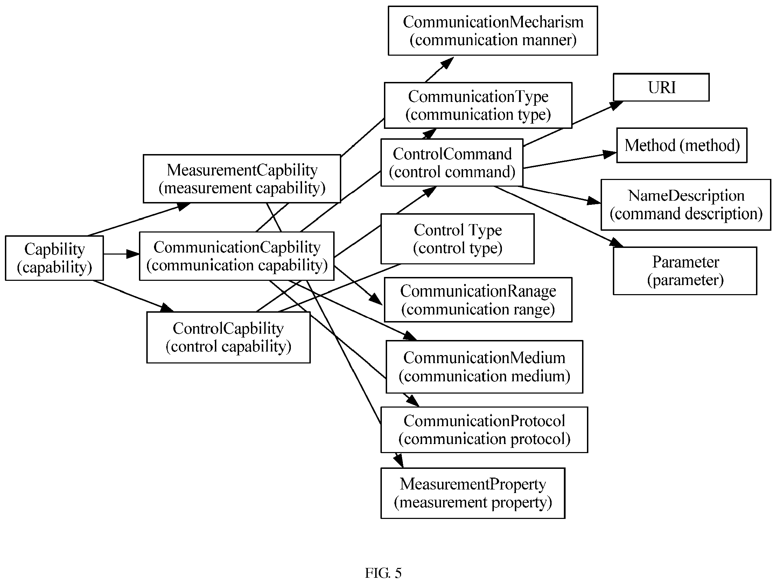

It should be noted that the capability model is applied to different M2M systems, and forms of capability models may be different. For example, as shown in FIG. 5, FIG. 5 shows a capability model of an M2M data processing system in a OneM2M environment, and the capability model is represented in a form of capability ontology. A capability (Capbility) in the capability model is divided into three types: a communication capability, a control capability, and a measurement capability. Each capability in the communication capability, the control capability, and the measurement capability includes multiple subentries, and each subentry may also include a next-level subentry.

For example, subentries included in the communication capability of the M2M data processing system in the OneM2M environment are separately: a communication type subentry, a communication manner subentry, a communication range subentry, a communication medium subentry, a communication protocol subentry, and the like. The measurement capability includes subentries such as a measurement property (MeasurementProperty) subentry. The control capability includes subentries such as a control command subentry and a control type subentry, and the control command subentry may further include next-level subentries such as a URI subentry, a method subentry, a command description subentry, and a parameter subentry. There are lines with arrows between different levels of types and/or subentries to indicate association between the types and/or subentries. For explanation of the types and the subentries, reference may be made to explanation in the capability model in FIG. 4.

It should be noted that a capability in the capability model is only divided, but the capability model is merely an empty framework model. For a registered M2M device, specific data of the M2M device needs to be filled to form a model that describes a capability of the M2M device, that is, a filled capability model. There may be multiple processes in which the M2M service platform obtains the filled capability model. For example, it is assumed that the following two obtaining methods exist in this embodiment of the present invention.

In one aspect, the M2M device A fills the capability model. Specifically, the M2M service platform may send the capability model to the M2M device A, and the M2M device A fills the capability model according to the capability information of the M2M device A to obtain the filled capability model. For example, the M2M device A may sequentially obtain, according to content in the capability model, specific data of a communication capability, a control capability, and a measurement capability of the M2M device A to form the capability information of the M2M device A, and fill a corresponding subentry in the capability model with the capability information of the M2M device A to obtain the filled capability model. Finally, the M2M device A sends the filled capability model to the M2M service platform.

It should be noted that capabilities of all M2M devices in the M2M data processing system may be different, and some M2M devices may not have a model filling capability and cannot fill a capability model. Therefore, the M2M service platform needs to send the capability model to the M2M device A after determining that the M2M device A has the model filling capability, so as to avoid an invalid action.

In this embodiment of the present invention, the registration request sent by the M2M device A to the M2M service platform in step 301 may include a model filling capability identifier, and the model filling capability identifier is used to indicate whether the M2M device has the model filling capability. The M2M service platform may first determine, according to the model filling capability identifier, whether the M2M device has the model filling capability, and send the capability model to the M2M device if the M2M device has the model filling capability, or does not send the capability model to the M2M device if the M2M device does not have the model filling capability. Particularly, in this embodiment of the present invention, it is assumed that a registration request sent by an M2M device with the model filling capability to the M2M service platform includes a model filling capability identifier, and the model filling capability identifier is a preset character such as "TRUE". If the M2M service platform receives a registration request including a model filling capability identifier, and the model filling capability identifier is the preset character, the M2M service platform determines that an M2M device that sends the registration request has the model filling capability. If the M2M service platform receives a registration request not including a model filling capability identifier, or the M2M service platform receives a registration request including a model filling capability identifier but the model filling capability identifier is not the preset character, the M2M service platform determines that an M2M device that sends the registration request does not have the model filling capability.

In another aspect, the service platform fills the capability model. Specifically, the registration request sent by the M2M device A to the M2M service platform in step 301 may include the capability information of the M2M device A, and the capability information may include specific data of a communication capability, a control capability, and a measurement capability of the M2M device A. The M2M service platform may fill all subentries in the capability model according to the capability information of the M2M device A to obtain the filled capability model.

Particularly, device capabilities of different M2M devices are different. For the M2M device A, the capability information of the M2M device A may include data corresponding to only a part of subentries in the communication capability, the control capability, and the measurement capability described in the capability model. Therefore, in the filled capability model obtained by means of filling according to the capability information, a part of subentries corresponding to the communication capability, the control capability, and the measurement capability of the M2M device A are filled, and content of other subentries cannot be learnt from the capability information and may be recorded as "null". Correspondingly, the filled capability model obtained by the M2M service platform describes at least one subentry in the communication capability, the control capability, and the measurement capability of the M2M device.

In the M2M data processing system in the OneM2M environment, after receiving the capability information of the M2M device A, the M2M service platform may create an <AE> resource, and use the capability information as a newly-added attribute: capability information (English: capabilityInformation, capabilityInfo for short) of the <AE> resource. An introduction of the newly-added attribute may be shown in Table 1. An attribute of the newly-added attribute in the <AE> is "capabilitylnfo", and a quantity of the attribute is zero or one (in Table 1, "0" indicates one attribute, and "1" indicates one attribute) and the attribute has a read/write property. The newly-added attribute is used to store the capability information sent by the M2M device, and is a character string type. An attribute of the newly-added attribute in an announced (English: Announced, Annc for short) resource (<AEAnnc>) of an application entity (English: Application Entity, AE for short) is "OA". "OA" represents "optional announced" (English: Optional Announced, OA for short), that is, the attribute may be announced or unannounced, and whether to announce the attribute is determined by a CSE that creates the <AE> resource.

**Table 1**

| Attribute of <AE> (an attribute in the <AE>) | Multiplicity (multiplicity) | RW (read and write)/RO (read only)/WO (write only) | Description (description) | <AEAnnc> Attributes (<AEAnnc> attributes) |
|---|---|---|---|---|
| capability Info | 0..1 | RW | Store capability information sent by the M2M device, a character string (string) type | OA |

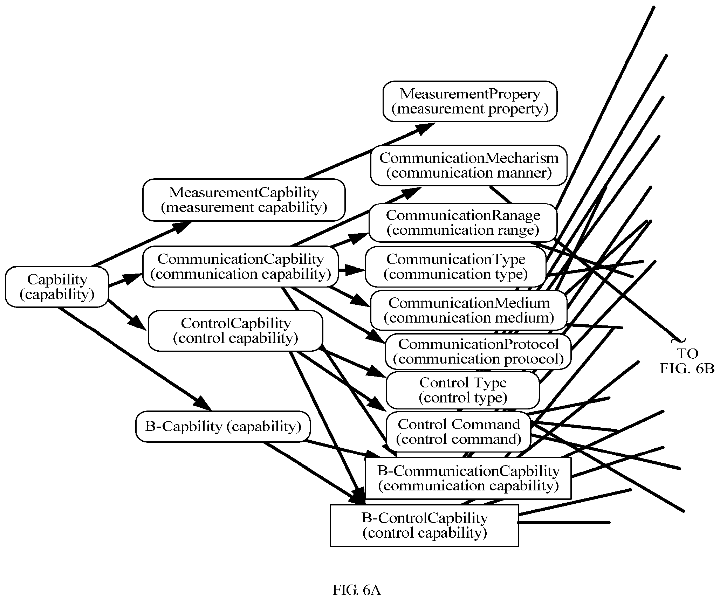

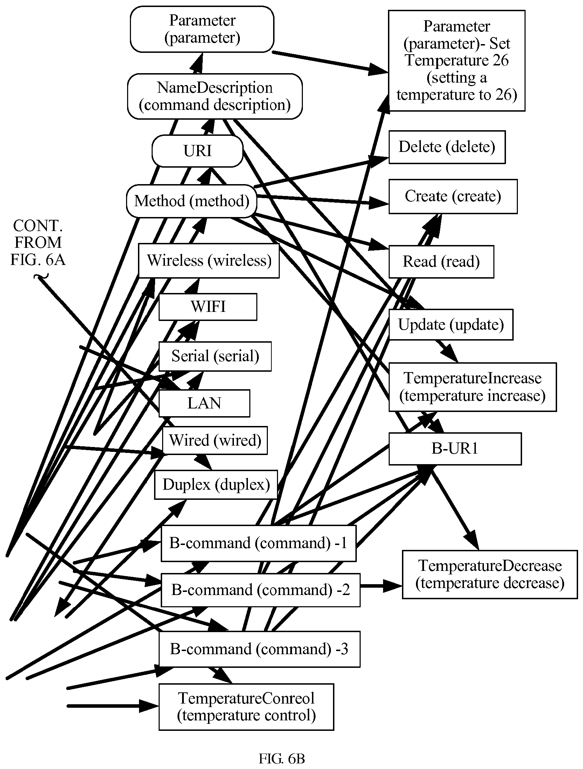

For example, in this embodiment of the present invention, it is assumed that an M2M device B is an air conditioner, and a filled capability model (also referred to as capability ontology) obtained according to capability information of the M2M device B may be shown in FIG. 6A and FIG. 6B. A capability (Capbility) in the capability model is divided into three types: a communication capability, a control capability, and a measurement capability. Each capability in the communication capability, the control capability, and the measurement capability includes multiple subentries. Subentries included in the communication capability are separately: a communication type subentry, a communication manner subentry, a communication range subentry, a communication medium subentry, and a communication protocol subentry. The measurement capability includes a measurement property (MeasurementPropery) subentry, and the measurement property subentry is a class (class) of a semantic sensor network (English: Semantic Sensor Network, SSN for short). An attribute "hasMeasurementProperty" defined in this embodiment of the present invention directs to the measurement property subentry from the measurement capability. This indicates that the measurement capability in this embodiment of the present invention is divided in a manner in which measurement capability of the SSN is divided. The control capability includes a control command subentry and a control type subentry, and each subentry may further include a next-level subentry. For example, each control command includes next-level subentries such as a command description (NameDescription) subentry, a method (Method) subentry, a URI subentry, and a parameter (Parameter) subentry. The method subentry indicates four operations: creation (Create), reading (Read), update (Update), and deletion (Delete) of a representational state transfer (English: Representational State Transfer, REST for short) interface. A capability of the M2M device B (B-Capbility) is connected to a general type: capability, and the capability of the M2M device B describes the general type: capability, indicating that the capability information of the M2M device B is filled. The capability of the M2M device B is divided into a communication capability of B (B-CommunicationCapbility) and a control capability of B (B-ControlCapbility) that are respectively connected to two types: the communication capability and the control capability. The communication capability of B describes the communication capability type, and the control capability of B describes the control capability type, indicating that the M2M device B has a communication capability and a control capability. Both the control capability of B and the control type subentry are connected to a temperature control (TemperatureConteol) subentry, and the control capability of B describes the temperature control subentry of the control type subentry, indicating that the control capability of the M2M device B is a temperature control capability. The control capability of B and the control command subentry are separately connected to a command 1 of B (B-command-1), a command 2 of B (B-command-2), and a command 3 of B (B-command-3), and the command 1 of the B, the command 2 of the B, and the command 3 of B describe the control command subentry, indicating that the M2M device has three types of commands, which are respectively a command 1, a command 2, and a command 3. In addition, the command 1 of the B, the command 2 of the B, and the command 3 of B are separately connected to a next-level subentry: a create (Create) subentry, of a method subentry, and the command 1 of the B, the command 2 of the B, and the command 3 of B describe the create subentry, indicating that the M2M device can create the commands 1, 2, and 3. The command 1 of the B, the command 2 of the B, and the command 3 of the B, and the URI subentry are separately connected to a URI of B (B-URI), and the command 1 of the B, the command 2 of the B, and the command 3 of B describe the URI subentry, indicating that all the commands 1, 2, and 3 carry the B-URI. The command 1 of B is connected to a next-level subentry: a temperature increase (TemperatureIncrease) subentry, of the command description subentry, and the command 1 of B describes the temperature increase subentry, indicating that the command 1 is used to control increase of a temperature. The command 2 of B is connected to a next-level subentry: a temperature decrease (TemperatureDecrease) subentry, of the command description subentry, and the command 2 of B describes the temperature decrease subentry, indicating that the command 2 is used to control decrease of a temperature. The command 3 of B and the parameter subentry are separately connected to a subentry: a parameter: setting a temperature to 26 (Parameter-Set Temperature26), and the command 1 of B describes the parameter subentry, indicating that the command 3 is used to control a temperature parameter to be set to 26 degrees Celsius. The communication capability of B is connected to a next-level subentry: a serial (serial) subentry, of the communication type subentry, and the communication capability of B describes the serial subentry of the communication type subentry, indicating that the M2M device performs serial communications. The communication capability of B is connected to next-level subentries: a wired (Wired) subentry, a WIFI subentry, and a wireless subentry, of the communication medium subentry, and the communication capability of B describes the wired (Wired) subentry, the WIFI subentry, and the wireless subentry of the communication medium subentry, indicating that the M2M device may perform communication by using a wired medium, WIFI, and a wireless (wireless) medium. The communication capability of B is connected to a next-level subentry: a duplex (Duplex) subentry, of the communication manner subentry, and the communication capability of B describes the duplex subentry of the communication manner subentry, indicating that the M2M device performs communication in a duplex manner. The communication capability of B is connected to a next-level subentry: a Local Area Network (English: Local Area Network, LAN for short) subentry, of the communication range subentry, and the communication capability of B describes the LAN subentry of the communication range subentry, indicating that a communication range of the M2M device is a LAN. There are lines with arrows between different levels of types and/or subentries to indicate association between the types and/or subentries. For explanation of each type and each subentry, reference may be made to explanation of a capability model in FIG. 4. It should be noted that content in a conventional rectangular box in FIG. 6A and FIG. 6B represents an instance in the ontology, and content in a rectangular box with rounded corners (also referred to as an elliptic box) represents a class in the ontology.

Step 304: The M2M service platform updates an overall capability model according to the filled capability model.

Capability information of all registered M2M devices managed by the M2M service platform is recorded in the overall capability model in a type division manner of the capability model. The overall capability model may be obtained by combining multiple filled capability models, or may be obtained by combining multiple filled capability models after integration (for example, combining same subentries). This is not limited in this embodiment of the present invention. A subentry of each capability in a communication capability, a control capability, and a measurement capability in the overall capability model includes a type subentry and at least one data subentry. The type subentry is used to describe a semantic meaning of each capability, and the at least one data subentry is used to describe a practical meaning of each capability. For a specific division manner, reference may be made to FIG. 4, and details are not described in this embodiment of the present invention.

Step 305: The M2M device A sends a query condition to the M2M service platform by using the application program.

Step 306: The M2M service platform searches the overall capability model according to the query condition, and uses a device that meets the query condition as a to-be-queried device.

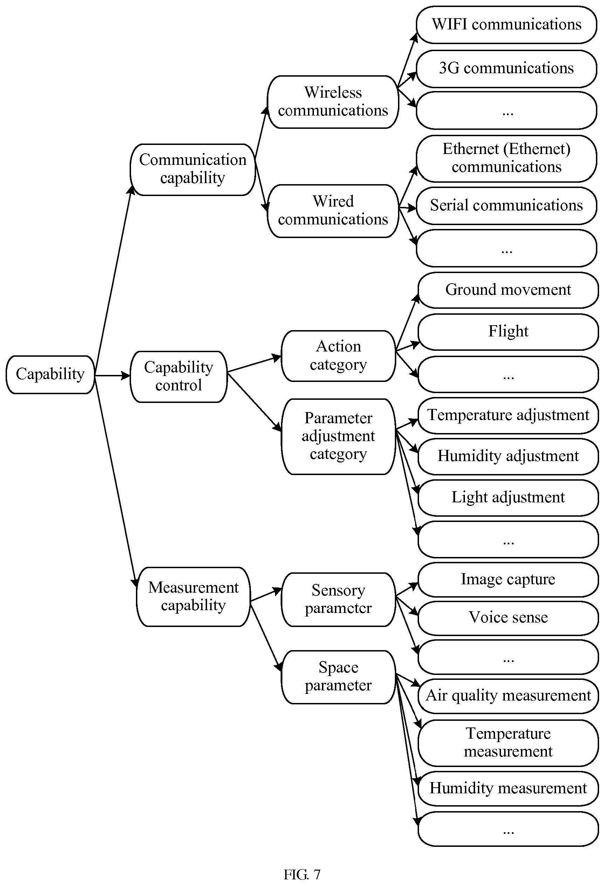

It should be noted that in this embodiment of the present invention, a capability field model is established on the M2M service platform. The capability field model describes capability categories of all of a communication capability, a control capability, and a measurement capability, and the capability categories are generally all possible capability categories in the M2M data processing system. As shown in FIG. 7, FIG. 7 shows an example of a structure of a capability field model. FIG. 7 may be seen as a tree model in which a root is capabilities, branches are a communication capability, a control capability, and a measurement capability, leaves are capability categories. The model records all possible capability categories in the M2M data processing system.

A capability in the capability field model is divided into three types: a communication capability, a control capability, and a measurement capability. The communication capability is divided into two categories: a wireless communications category and a wired communications category. The wireless communications is divided into a WIFI communications category, a 3G communications category, and the like. The wired communications is divided into an Ethernet (Ethernet) communications category, a serial communications category, and the like. The control capability is divided into two categories: an action category and an adjustment parameter category. The action category is divided into a ground movement category and a flight category. The adjustment parameter category is divided into a temperature adjustment category, a humidity adjustment category, a light adjustment category, and the like. The measurement capability is divided into two categories: a sensory parameter category and a space parameter category. The sensory parameter category is divided into an image capture category, a voice sense category, and the like. The space parameter is divided into an air quality measurement category, a temperature measurement category, a humidity measurement category, and the like. A described type subentry of a subentry of each capability in the overall capability model is associated with a capability category of a corresponding capability in the capability field model. For example, the temperature adjustment category in FIG. 7 is associated with a described control type subentry: the temperature control subentry in FIG. 6B; and the wired communication category or the serial communication category in FIG. 7 is associated with a described communication type subentry: the serial subentry in FIG. 6B.

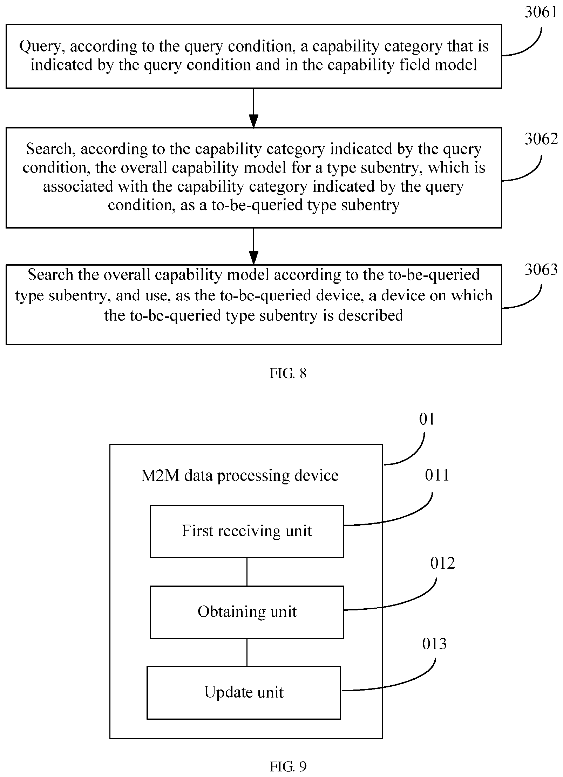

The foregoing query condition may include a capability category, such as the serial communication category and the temperature adjustment category, of at least one of the communication capability, the control capability, or the measurement capability. As shown in FIG. 8, a process of determining the to-be-queried device may include the following steps.

Step 3061: Query, according to the query condition, a capability category that is in the capability field model and indicated by the query condition.

For example, if the query condition includes the temperature adjustment category, it indicates that the M2M device A expects to search for all M2M devices that can adjust a temperature. Because all possible capability categories in the M2M data processing system are recorded in the capability field model, the capability field model may be searched level by level according to the capability category in the query condition, till the capability category indicated by the query condition is found.

Step 3062: Search, according to the capability category indicated by the query condition, the overall capability model for a type subentry that is associated with the capability category indicated by the query condition, and use the type subentry as a to-be-queried type subentry.

Because a described type subentry of a subentry of each capability in the overall capability model is associated with a capability category of a corresponding capability in the capability field model, the overall capability model may be searched according to the capability category indicated by the query condition for the type subentry that is associated with the capability category indicated by the query condition, and the type subentry is used as the to-be-queried type subentry. For example, the temperature control subentry shown in FIG. 6B may be found according to the described control type subentry associated with the temperature adjustment category.

Step 3063: Search the overall capability model according to the to-be-queried type subentry, and use, as the to-be-queried device, a device on which the to-be-queried type subentry is described.

For example, it can be determined, according to the temperature control subentry shown in FIG. 6B, that an M2M device on which the temperature control subentry is described is the M2M device B. Particularly, because capability information of multiple M2M devices is recorded in the overall capability model, multiple M2M devices may be used as to-be-queried devices according to the query condition. In this embodiment of the present invention, it is assumed that the to-be-queried devices are the M2M device B and an M2M device C.

Step 307: The M2M service platform sends an identifier of the to-be-queried device to the application program of the M2M device A.

That is, The M2M service platform sends identifiers of the M2M device B and the M2M device C to the application program of the M2M device A.

Step 308: The M2M device A selects a target M2M device from the device corresponding to the identifier of the to-be-queried device.

The M2M device A may select the target M2M device from the device corresponding to the identifier of the to-be-queried device. For example, the target M2M device may be randomly selected, or be screened according to a newly set capability category. In this embodiment of the present invention, it is assumed that the target M2M device finally obtained by means of screening is the M2M device B.

Step 309: The M2M device A sends control information to the M2M service platform, where the control information includes an identifier of the target M2M device and an instruction parameter.

The control information instructs the target M2M device to execute a corresponding action according to the instruction parameter. For example, the instruction parameter is Parameter(parameter)-Set Temperature26(setting a temperature to 26), that is, the target M2M device adjusts a temperature to 26 degrees Celsius.

Step 310: The M2M service platform queries at least one data subentry in a control capability in the overall capability model according to the identifier of the target M2M device to obtain a control command corresponding to the target M2M device.

The data subentry in the control capability in the overall capability model describes control commands corresponding to all the registered M2M devices. Therefore, the M2M service platform queries the at least one data subentry in the control capability in the overall capability model according to the identifier of the target M2M device to obtain the control command corresponding to the target M2M device. For example, the M2M service platform queries the at least one data subentry in the control capability in the overall capability model according to an identifier of the M2M device B. The overall capability model includes the filled capability model shown in FIG. 6A and FIG. 6B, so that obtained control commands corresponding to the target M2M device are separately the command 1 of B (B-command-1), the command 2 of B (B-command-2), and the command 3 of B (B-command-3).

Step 311: Generate a target control command according to the instruction parameter and the control command.

When the instruction parameter is the Parameter(Parameter)-Set Temperature26(setting a temperature to 26). It can be learnt from FIG. 6A and FIG. 6B that the instruction parameter is corresponding to the command 3 of B (B-command-3). Therefore, the generated target control command is the "B-command-3".

Step 312: The M2M service platform sends the target control command to the target M2M device according to the identifier of the target M2M device.

Step 313: The target M2M device performs an action instructed by the target control command and generates feedback data.

For example, the target M2M device adjusts the temperature to 26 degrees Celsius according to the target control command "B-command-3", and the feedback data indicates that the temperature has been adjusted to 26 degrees Celsius.

Step 314. The target M2M device sends the feedback data to the M2M service platform.

Step 315. The M2M service platform sends the feedback data to the M2M device.

Particularly, the M2M data processing system further includes an M2M device on which no application program is installed. The M2M device generally does not have a query function and a control function and may perform a related action such as temperature adjustment and humidity measurement under the control of an M2M device on which an application program is installed. Another function of the M2M device is the same as that of the M2M device on which an application program is installed. Therefore, for a specific action of the M2M device on which no application program is installed, reference may be made to a related action of the M2M device A in steps 301 to 304 and an action of the target M2M device in steps 313 to 314, and details are not described in this embodiment of the present invention.

It should be noted that a sequence of the steps of the M2M data processing method provided in the embodiments of the present invention may be properly adjusted, and the steps may also be correspondingly added or deleted according to a situation.

In conclusion, according to the M2M data processing method provided in this embodiment of the present invention, a capability model includes three types of capabilities: a communication capability, a control capability, and a measurement capability, and each capability is divided into multiple subentries according to a preset rule. Therefore, a filled capability model obtained according to the capability model and capability information of an M2M device is also divided in a type division manner of the capability model; and an overall capability model updated by using the filled capability model is also divided in the type division manner of the capability model. In this case, a query may be performed by the type without massive data queries. Therefore, a query latency and waste of hardware resources of an M2M service platform are reduced.

An example of an embodiment of the present invention provides an M2M data processing device 01 applied to an M2M service platform. As shown in FIG. 9, the M2M data processing device 01 includes: a first receiving unit 011, an obtaining unit 012, and an update unit 013.

The first receiving unit 011 is configured to receive a registration request sent by an M2M device.

The obtaining unit 012 is configured to obtain a filled capability model according to a capability model and capability information of the M2M device after authentication on the registration request succeeds, where the capability model includes three types of capabilities: a communication capability, a control capability, and a measurement capability, each capability is divided into multiple subentries according to a preset rule, and the filled capability model describes at least one subentry corresponding to a communication capability, a control capability, and a measurement capability of the M2M device.

The update unit 013 is configured to update an overall capability model according to the filled capability model, where capability information of all registered M2M devices managed by the M2M service platform is recorded in the overall capability model in a type division manner of the capability model.

In conclusion, according to the M2M data processing device provided in this embodiment of the present invention, a capability model includes three types of capabilities: a communication capability, a control capability, and a measurement capability, and each capability is divided into multiple subentries according to a preset rule. Therefore, a filled capability model obtained by an obtaining unit according to the capability model and capability information of an M2M device is also divided in a type division manner of the capability model; and an overall capability model updated by an update unit by using the filled capability model is also divided in the type division manner of the capability model. In this case, a query may be performed by the type without massive data queries. Therefore, a query latency and waste of hardware resources of an M2M service platform are reduced.

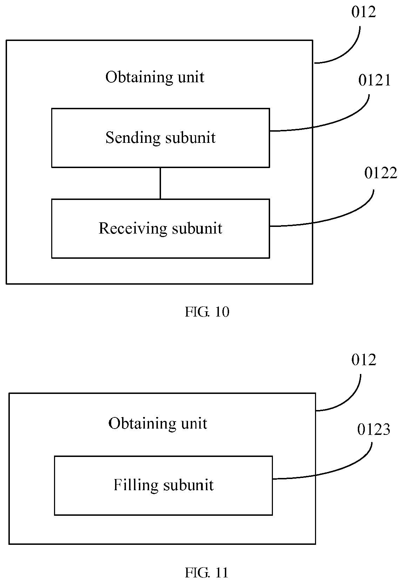

In one aspect, as shown in FIG. 10, the obtaining unit 012 includes:
a sending subunit 0121, configured to send the capability model to the M2M device, so that the M2M device fills the capability model according to the capability information of the M2M device to obtain the filled capability model; and
a receiving subunit 0122, configured to receive the filled capability model sent by the M2M device.

The registration request includes a model filling capability identifier, and the model filling capability identifier is used to indicate whether the M2M device has a model filling capability. The sending subunit 0121 is specifically configured to: determine, according to the model filling capability identifier, whether the M2M device has the model filling capability; and send the capability model to the M2M device if the M2M device has the model filling capability.

In another aspect, as shown in FIG. 11, the registration request includes the capability information of the M2M device; and the obtaining unit 012 includes:
a filling subunit 0123, configured to fill the capability model with the capability information of the M2M device to obtain the filled capability model.

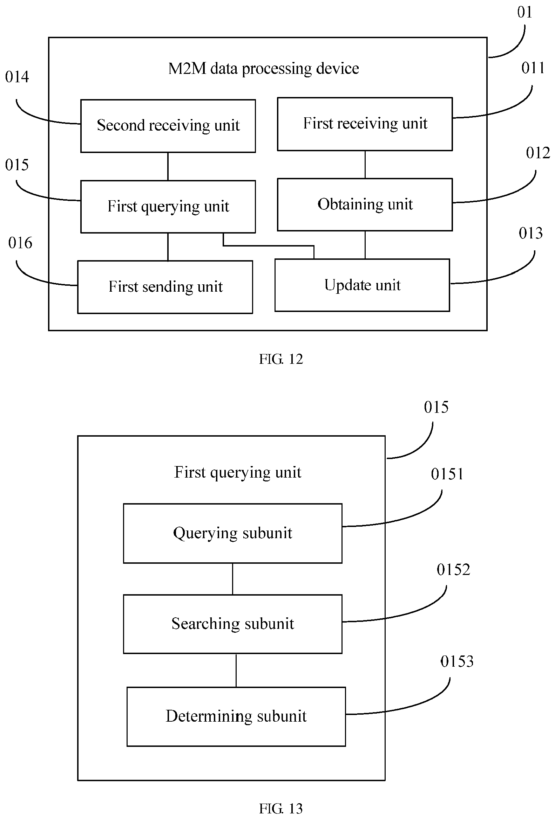

An example of an embodiment of the present invention provides another M2M data processing device 01 applied to an M2M service platform. As shown in FIG. 12, the M2M data processing device 01 includes: a first receiving unit 011, an obtaining unit 012, an update unit 013, a second receiving unit 014, a first querying unit 015, and a first sending unit 016.

The first receiving unit 011 is configured to receive a registration request sent by an M2M device.

The obtaining unit 012 is configured to obtain a filled capability model according to a capability model and capability information of the M2M device after authentication on the registration request succeeds, where the capability model includes three types of capabilities: a communication capability, a control capability, and a measurement capability, each capability is divided into multiple subentries according to a preset rule, and the filled capability model describes at least one subentry corresponding to a communication capability, a control capability, and a measurement capability of the M2M device.

The update unit 013 is configured to update an overall capability model according to the filled capability model, where capability information of all registered M2M devices managed by the M2M service platform is recorded in the overall capability model in a type division manner of the capability model.

The second receiving unit 014 is configured to receive a query condition sent by an application program, where the application program is installed on the M2M device.

The first querying unit 015 is configured to search the overall capability model according to the query condition, and use a device that meets the query condition as a to-be-queried device.

The first sending unit 016 is configured to send an identifier of the to-be-queried device to the application program of the M2M device.

A subentry of each capability in a communication capability, a control capability, and a measurement capability in the overall capability model includes a type subentry and at least one data subentry. The type subentry is used to describe a semantic meaning of each capability, and the at least one data subentry is used to describe a practical meaning of each capability. A capability field model is established on the M2M service platform, and the capability field model describes a capability category of each capability in the communication capability, the control capability, and the measurement capability. A described type subentry of a subentry of each capability in the overall capability model is associated with a capability category of a corresponding capability in the capability field model. The query condition includes a capability category of at least one capability in the communication capability, the control capability, and the measurement capability.

As shown in FIG. 13, the first querying unit 015 includes: a querying subunit 0151, a searching subunit 0152, and a determining subunit 0153.

The querying subunit 0151 is configured to query, according to the query condition, a capability category that is in the capability field model and indicated by the query condition.

The searching subunit 0152 is configured to search, according to the capability category indicated by the query condition, the overall capability model for a type subentry that is associated with the capability category indicated by the query condition, and use the type subentry as a to-be-queried type subentry.

The determining subunit 0153 is configured to search the overall capability model according to the to-be-queried type subentry, and use, as the to-be-queried device, a device on which the to-be-queried type subentry is described.

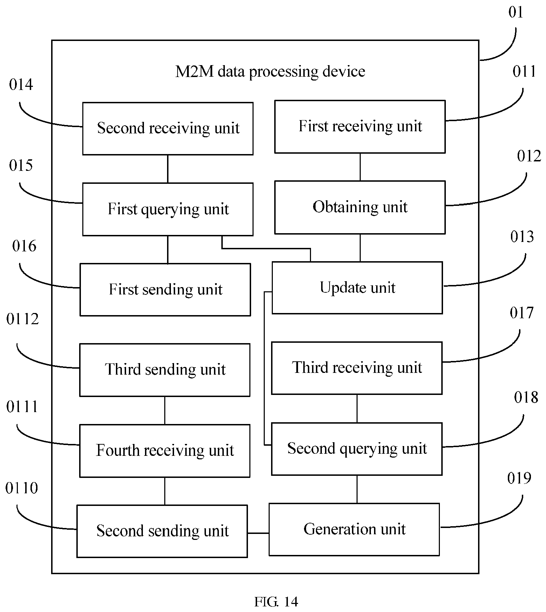

An example of an embodiment of the present invention provides still another M2M data processing device 01 applied to an M2M service platform, and a data subentry in a control capability in an overall capability model describes control commands corresponding to all registered M2M devices. As shown in FIG. 14, the M2M data processing device 01 includes: a first receiving unit 011, an obtaining unit 012, an update unit 013, a second receiving unit 014, a first querying unit 015, a first sending unit 016, a third receiving unit 017, a second querying unit 018, a generation unit 019, a second sending unit 0110, a fourth receiving unit 0111, and a third sending unit 0112.

The first receiving unit 011 is configured to receive a registration request sent by an M2M device.

The obtaining unit 012 is configured to obtain a filled capability model according to a capability model and capability information of the M2M device after authentication on the registration request succeeds, where the capability model includes three types of capabilities: a communication capability, a control capability, and a measurement capability, each capability is divided into multiple subentries according to a preset rule, and the filled capability model describes at least one subentry corresponding to a communication capability, a control capability, and a measurement capability of the M2M device.

The update unit 013 is configured to update an overall capability model according to the filled capability model, where capability information of all registered M2M devices managed by the M2M service platform is recorded in the overall capability model in a type division manner of the capability model.

The second receiving unit 014 is configured to receive a query condition sent by an application program, where the application program is installed on the M2M device.

The first querying unit 015 is configured to search the overall capability model according to the query condition, and use a device that meets the query condition as a to-be-queried device.

The first sending unit 016 is configured to send an identifier of the to-be-queried device to the application program of the M2M device.

The third receiving unit 017 is configured to receive control information sent by the application program, where the control information includes an identifier of the target M2M device and an instruction parameter, and the target M2M device is selected by the application program from the device corresponding to the identifier of the to-be-queried device.

The second querying unit 018 is configured to query at least one data subentry in the control capability in the overall capability model according to the identifier of the target M2M device to obtain a control command corresponding to the target M2M device.

The generation unit 019 is configured to generate a target control command according to the instruction parameter and the control command.

The second sending unit 0110 is configured to send the target control command to the target M2M device according to the identifier of the target M2M device, so that the target M2M device performs an action instructed by the target control command and generates feedback data.

The fourth receiving unit 0111 is configured to receive the feedback data sent by the target M2M device.

The third sending unit 0112 is configured to send the feedback data to the application program.

A type subentry of the communication capability in the overall capability model is a communication type subentry, and at least one data subentry of the communication capability in the overall capability model includes: a communication medium subentry, a communication range subentry, a communication manner subentry, and a communication protocol subentry. A type subentry of the control capability in the overall capability model is a control type subentry, a data subentry of the control capability in the overall capability model describes the control commands corresponding to all the registered M2M devices, and each control command includes next-level subentries such as a command description subentry, a device subentry, a uniform resource identifier URI subentry, and a parameter subentry.

In conclusion, according to the M2M data processing device provided in this embodiment of the present invention, a capability model includes three types of capabilities: a communication capability, a control capability, and a measurement capability, and each capability is divided into multiple subentries according to a preset rule. Therefore, a filled capability model obtained by an obtaining unit according to the capability model and capability information of an M2M device is also divided in a type division manner of the capability model; and an overall capability model updated by an update unit by using the filled capability model is also divided in the type division manner of the capability model. In this case, a query may be performed by the type without massive data queries. Therefore, a query latency and waste of hardware resources of an M2M service platform are reduced.

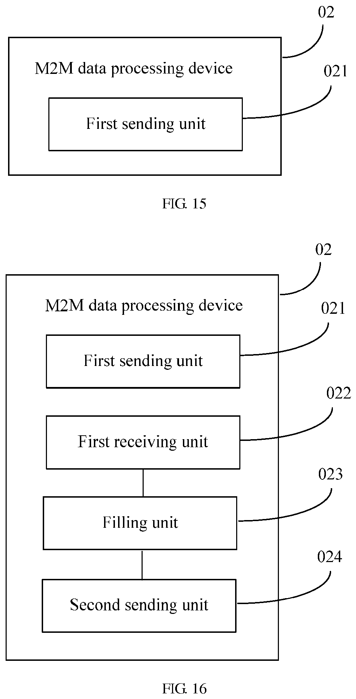

Another example of an embodiment of the present invention provides an M2M data processing device 02 applied to an M2M device. As shown in FIG. 15, the M2M data processing device 02 includes a first sending unit 021.

The first sending unit 021 is configured to send a registration request to an M2M service platform, so that the M2M service platform obtains a filled capability model according to a capability model and capability information of the M2M device after authentication on the registration request succeeds, and updates an overall capability model according to the filled capability model.

The capability model includes three types of capabilities: a communication capability, a control capability, and a measurement capability, and each capability is divided into multiple subentries according to a preset rule; the filled capability model describes at least one subentry corresponding to a communication capability, a control capability, and a measurement capability of the M2M device; and capability information of all registered M2M devices managed by the M2M service platform is recorded in the overall capability model in a type division manner of the capability model.

In conclusion, according to the M2M data processing method provided in this embodiment of the present invention, a capability model includes three types of capabilities: a communication capability, a control capability, and a measurement capability, and each capability is divided into multiple subentries according to a preset rule. Therefore, a filled capability model obtained according to the capability model and capability information of an M2M device is also divided in a type division manner of the capability model; and an overall capability model updated by using the filled capability model is also divided in the type division manner of the capability model. In this case, a query may be performed by the type without massive data queries. Therefore, a query latency and waste of hardware resources of an M2M service platform are reduced.

Another example of an embodiment of the present invention provides another M2M data processing device 02 applied to an M2M device. As shown in FIG. 16, the M2M data processing device 02 including: a first sending unit 021, a first receiving unit 022, a filling unit 023, and a second sending unit 024.

The first sending unit 021 is configured to send a registration request to an M2M service platform, so that the M2M service platform obtains a filled capability model according to a capability model and capability information of the M2M device after authentication on the registration request succeeds, and updates an overall capability model according to the filled capability model.

The capability model includes three types of capabilities: a communication capability, a control capability, and a measurement capability, and each capability is divided into multiple subentries according to a preset rule; the filled capability model describes at least one subentry corresponding to a communication capability, a control capability, and a measurement capability of the M2M device; and capability information of all registered M2M devices managed by the M2M service platform is recorded in the overall capability model in a type division manner of the capability model.

The first receiving unit 022 is configured to receive the capability model sent by the M2M service platform.

The filling unit 023 is configured to fill the capability model according to the capability information of the M2M device to obtain the filled capability model.

The second sending unit 024 is configured to send the filled capability model to the M2M service platform.

Particularly, the registration request may include a model filling capability identifier, and the model filling capability identifier is used to indicate whether the M2M device has a model filling capability. The registration request may further include the capability information of the M2M device.

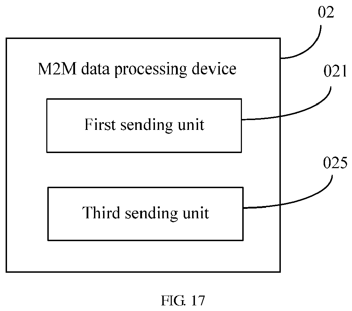

Further, an application program may be installed on the M2M device. Another example of an embodiment of the present invention provides still another M2M data processing device 02 applied to an M2M device. As shown in FIG. 17, the M2M data processing device 02 includes: a first sending unit 021 and a third sending unit 025.

The first sending unit 021 is configured to send a registration request to an M2M service platform, so that the M2M service platform obtains a filled capability model according to a capability model and capability information of the M2M device after authentication on the registration request succeeds, and updates an overall capability model according to the filled capability model.

The capability model includes three types of capabilities: a communication capability, a control capability, and a measurement capability, and each capability is divided into multiple subentries according to a preset rule; the filled capability model describes at least one subentry corresponding to a communication capability, a control capability, and a measurement capability of the M2M device; and capability information of all registered M2M devices managed by the M2M service platform is recorded in the overall capability model in a type division manner of the capability model.

The third sending unit 025 is configured to send a query condition to the M2M service platform by using the application program, so that the M2M service platform searches the overall capability model according to the query condition, uses a device that meets the query condition as a to-be-queried device, and sends an identifier of the to-be-queried device to the application program.

It should be noted that a subentry of each capability in a communication capability, a control capability, and a measurement capability in the overall capability model includes a type subentry and at least one data subentry. The type subentry is used to describe a semantic meaning of each capability, and the at least one data subentry is used to describe a practical meaning of each capability. A capability field model is established on the M2M service platform, and the capability field model describes a capability category of each capability in the communication capability, the control capability, and the measurement capability. A described type subentry of a subentry of each capability in the overall capability model is associated with a capability category of a corresponding capability in the capability field model. The query condition includes a capability category of at least one capability in the communication capability, the control capability, and the measurement capability.

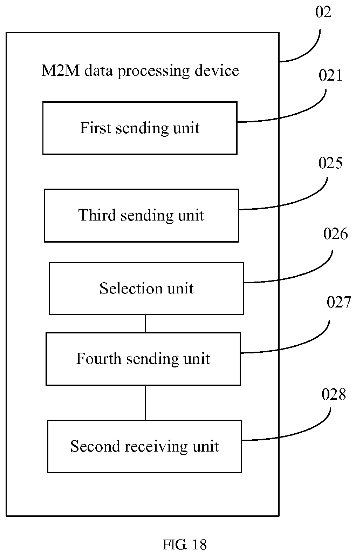

Another example of an embodiment of the present invention provides still another M2M data processing device 02 applied to an M2M device, and a data subentry in a control capability in an overall capability model describes control commands corresponding to all registered M2M devices. As shown in FIG. 18, the M2M data processing device 02 includes: a first sending unit 021, a third sending unit 025, a selection unit 026, a fourth sending unit 027, and a second receiving unit 028.

The first sending unit 021 is configured to send a registration request to an M2M service platform, so that the M2M service platform obtains a filled capability model according to a capability model and capability information of the M2M device after authentication on the registration request succeeds, and updates the overall capability model according to the filled capability model.

The capability model includes three types of capabilities: a communication capability, a control capability, and a measurement capability, and each capability is divided into multiple subentries according to a preset rule; the filled capability model describes at least one subentry corresponding to a communication capability, a control capability, and a measurement capability of the M2M device; and capability information of all registered M2M devices managed by the M2M service platform is recorded in the overall capability model in a type division manner of the capability model.

The third sending unit 025 is configured to send a query condition to the M2M service platform by using the application program, so that the M2M service platform searches the overall capability model according to the query condition, uses a device that meets the query condition as a to-be-queried device, and sends an identifier of the to-be-queried device to the application program.

The selection unit 026 is configured to select a target M2M device from the device corresponding to the identifier of the to-be-queried device.

The fourth sending unit 027 is configured to send control information to the M2M service platform, where the control information includes an identifier of the target M2M device and an instruction parameter, so that the M2M service platform queries at least one data subentry in the control capability in the overall capability model according to the identifier of the target M2M device to obtain a control command corresponding to the target M2M device, generates a target control command according to the instruction parameter and the control command, and sends the target control command to the target M2M device according to the identifier of the target M2M device.

The second receiving unit 028 is configured to receive feedback data sent by the M2M service platform, where after the target M2M device performs an action instructed by the target control command, the feedback data is generated and sent to the M2M service platform.

For example, a type subentry of the communication capability in the overall capability model is a communication type subentry, and at least one data subentry of the communication capability in the overall capability model includes: a communication medium subentry, a communication range subentry, a communication manner subentry, and a communication protocol subentry. A type subentry of the control capability in the overall capability model is a control type subentry, the data subentry of the control capability in the overall capability model describes the control commands corresponding to all the registered M2M devices, and each control command includes next-level subentries such as a command description subentry, a device subentry, a URI subentry, and a parameter subentry.

In conclusion, according to the M2M data processing method provided in this embodiment of the present invention, a capability model includes three types of capabilities: a communication capability, a control capability, and a measurement capability, and each capability is divided into multiple subentries according to a preset rule. Therefore, a filled capability model obtained according to the capability model and capability information of an M2M device is also divided in a type division manner of the capability model; and an overall capability model updated by using the filled capability model is also divided in the type division manner of the capability model. In this case, a query may be performed by the type without massive data queries. Therefore, a query latency and waste of hardware resources of an M2M service platform are reduced.

An embodiment of the present invention provides an M2M data processing system. For a specific structure, reference may be made to FIG. 1, and the M2M data processing system includes: an M2M service platform and an M2M device.

The M2M service platform includes the M2M data processing device shown in any one of FIG. 9, FIG. 12, or FIG. 14 in the embodiments of the present invention.

The M2M device includes the M2M data processing device shown in any one of FIG. 15 to FIG. 18 in the embodiments of the present invention.

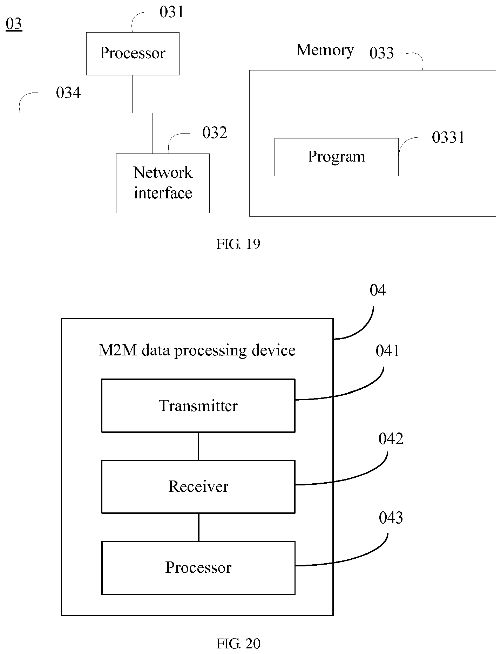

Still another example of an embodiment of the present invention provides an M2M data processing device 03 applied to an M2M service platform. As shown in FIG. 19, the M2M data processing device 03 includes: at least one processor 031, at least one network interface 032 or another communications interface, a memory 033, and at least one communications bus 034. For example, the processor 031 may be a central processing unit (English: Central processing unit, CPU for short), and the communications bus 034 is configured to implement connections and communication between these devices. The processor 031 is configured to execute an executable module stored in the memory 033, such as a computer program. The memory 033 may include a high-speed random access memory (English: Random Access Memory, RAM for short), or may include a non-volatile memory (non-volatile memory), for example, at least one disk memory. A connection between the M2M service platform and the M2M device is implemented by using the at least one network interface 032.

In some implementation manners, the memory 033 stores a program 0331, and the program 0331 may be executed by the processor 031, and the program 0331 may include:
receiving a registration request sent by an M2M device;
obtaining a filled capability model according to a capability model and capability information of the M2M device after authentication on the registration request succeeds, where the capability model includes three types of capabilities: a communication capability, a control capability, and a measurement capability, each capability is divided into multiple subentries according to a preset rule, and the filled capability model describes at least one subentry corresponding to a communication capability, a control capability, and a measurement capability of the M2M device; and
updating an overall capability model according to the filled capability model, where capability information of all registered M2M devices managed by the M2M service platform is recorded in the overall capability model in a type division manner of the capability model.

Optionally, the obtaining a filled capability model according to a capability model and capability information of the M2M device includes:
sending the capability model to the M2M device, so that the M2M device fills the capability model according to the capability information of the M2M device to obtain the filled capability model; and
receiving the filled capability model sent by the M2M device.

Optionally, the registration request includes a model filling capability identifier, and the model filling capability identifier is used to indicate whether the M2M device has a model filling capability.

The sending the capability model to the M2M device includes:
determining, according to the model filling capability identifier, whether the M2M device has the model filling capability; and
sending the capability model to the M2M device if the M2M device has the model filling capability.

Optionally, the registration request includes the capability information of the M2M device; and
the obtaining a filled capability model according to a capability model and capability information of the M2M device includes:
filling, by the M2M service platform, the capability model with the capability information of the M2M device to obtain the filled capability model.

Optionally, after the updating an overall capability model according to the filled capability model, the program 0331 stored in the memory 033 further includes:
receiving a query condition sent by an application program, where the application program is installed on the M2M device;
searching the overall capability model according to the query condition, and using a device that meets the query condition as a to-be-queried device; and
sending an identifier of the to-be-queried device to the application program of the M2M device.

Optionally, a subentry of each capability in a communication capability, a control capability, and a measurement capability in the overall capability model includes a type subentry and at least one data subentry. The type subentry is used to describe a semantic meaning of each capability, and the at least one data subentry is used to describe a practical meaning of each capability. A capability field model is established on the M2M service platform, and the capability field model describes a capability category of each capability in the communication capability, the control capability, and the measurement capability. A described type subentry of a subentry of each capability in the overall capability model is associated with a capability category of a corresponding capability in the capability field model. The query condition includes a capability category of at least one capability in the communication capability, the control capability, and the measurement capability.

The searching the overall capability model according to the query condition, and using a device that meets the query condition as a to-be-queried device includes:
querying, according to the query condition, a capability category that is in the capability field model and indicated by the query condition;
searching, according to the capability category indicated by the query condition, the overall capability model for a type subentry that is associated with the capability category indicated by the query condition, and using the type subentry as a to-be-queried type subentry; and
searching the overall capability model according to the to-be-queried type subentry, and using, as the to-be-queried device, a device on which the to-be-queried type subentry is described.

Optionally, a data subentry in the control capability in the overall capability model describes control commands corresponding to all the registered M2M devices, and after the sending an identifier of the to-be-queried device to the application program, the program 0331 stored in the memory 033 further includes:
receiving control information sent by the application program, where the control information includes an identifier of the target M2M device and an instruction parameter, and the target M2M device is selected by the application program from the device corresponding to the identifier of the to-be-queried device;
querying the at least one data subentry in the control capability in the overall capability model according to the identifier of the target M2M device to obtain a control command corresponding to the target M2M device;
generating a target control command according to the instruction parameter and the control command;
sending the target control command to the target M2M device according to the identifier of the target M2M device, so that the target M2M device performs an action instructed by the target control command and generates feedback data;
receiving the feedback data sent by the target M2M device; and
sending the feedback data to the application program.

Optionally, a type subentry of the communication capability in the overall capability model is a communication type subentry, and at least one data subentry of the communication capability in the overall capability model includes: a communication medium subentry, a communication range subentry, a communication manner subentry, and a communication protocol subentry; and
a type subentry of the control capability in the overall capability model is a control type subentry, a data subentry of the control capability in the overall capability model describes control commands corresponding to all the registered M2M devices, and each control command includes next-level subentries such as a command description subentry, a device subentry, a universal resource identifier URI subentry, and a parameter subentry.

In conclusion, according to the M2M data processing method provided in this embodiment of the present invention, a capability model includes three types of capabilities: a communication capability, a control capability, and a measurement capability, and each capability is divided into multiple subentries according to a preset rule. Therefore, a filled capability model obtained according to the capability model and capability information of an M2M device is also divided in a type division manner of the capability model; and an overall capability model updated by using the filled capability model is also divided in the type division manner of the capability model. In this case, a query may be performed by the type without massive data queries. Therefore, a query latency and waste of hardware resources of an M2M service platform are reduced.

Yet another example of an embodiment of the present invention provides an M2M data processing device 04 applied to an M2M device. As shown in FIG. 20, the M2M data processing device 04 includes: a transmitter 041, a receiver 042, and a processor 043.

The transmitter 041 is configured to send a registration request to an M2M service platform, so that the M2M service platform obtains a filled capability model according to a capability model and capability information of the M2M device after authentication on the registration request succeeds, and updates an overall capability model according to the filled capability model.

The capability model includes three types of capabilities: a communication capability, a control capability, and a measurement capability, and each capability is divided into multiple subentries according to a preset rule; the filled capability model describes at least one subentry corresponding to a communication capability, a control capability, and a measurement capability of the M2M device; and capability information of all registered M2M devices managed by the M2M service platform is recorded in the overall capability model in a type division manner of the capability model.

In conclusion, according to the M2M data processing method provided in this embodiment of the present invention, a capability model includes three types of capabilities: a communication capability, a control capability, and a measurement capability, and each capability is divided into multiple subentries according to a preset rule. Therefore, a filled capability model obtained according to the capability model and capability information of an M2M device is also divided in a type division manner of the capability model; and an overall capability model updated by using the filled capability model is also divided in the type division manner of the capability model. In this case, a query may be performed by the type without massive data queries. Therefore, a query latency and waste of hardware resources of an M2M service platform are reduced.

An embodiment of the present invention provides an M2M data processing device 04 applied to an M2M device. As shown in FIG. 18, the M2M data processing device 04 includes: a transmitter 041, a receiver 042, and a processor 043.

The transmitter 041 is configured to send a registration request to an M2M service platform, so that the M2M service platform obtains a filled capability model according to a capability model and capability information of the M2M device after authentication on the registration request succeeds, and updates an overall capability model according to the filled capability model.

The capability model includes three types of capabilities: a communication capability, a control capability, and a measurement capability, and each capability is divided into multiple subentries according to a preset rule; the filled capability model describes at least one subentry corresponding to a communication capability, a control capability, and a measurement capability of the M2M device; and capability information of all registered M2M devices managed by the M2M service platform is recorded in the overall capability model in a type division manner of the capability model.

The receiver 042 is configured to receive the capability model sent by the M2M service platform.

The processor 043 is configured to fill the capability model according to the capability information of the M2M device to obtain the filled capability model.

The transmitter 041 is further configured to send the filled capability model to the M2M service platform.

Optionally, the registration request includes a model filling capability identifier, and the model filling capability identifier is used to indicate whether the M2M device has a model filling capability.

Optionally, the registration request includes the capability information of the M2M device.

An embodiment of the present invention provides an M2M data processing device 04 applied to an M2M device. As shown in FIG. 18, the M2M data processing device 04 includes: a transmitter 041, a receiver 042, and a processor 043. An application program is installed on the M2M device.

The transmitter 041 is configured to send a registration request to an M2M service platform, so that the M2M service platform obtains a filled capability model according to a capability model and capability information of the M2M device after authentication on the registration request succeeds, and updates an overall capability model according to the filled capability model.

The capability model includes three types of capabilities: a communication capability, a control capability, and a measurement capability, and each capability is divided into multiple subentries according to a preset rule; the filled capability model describes at least one subentry corresponding to a communication capability, a control capability, and a measurement capability of the M2M device; and capability information of all registered M2M devices managed by the M2M service platform is recorded in the overall capability model in a type division manner of the capability model.

The transmitter 041 is further configured to send a query condition to the M2M service platform by using the application program, so that the M2M service platform searches the overall capability model according to the query condition, uses a device that meets the query condition as a to-be-queried device, and sends an identifier of the to-be-queried device to the application program.

A subentry of each capability in a communication capability, a control capability, and a measurement capability in the overall capability model includes a type subentry and at least one data subentry. The type subentry is used to describe a semantic meaning of each capability, and the at least one data subentry is used to describe a practical meaning of each capability. A capability field model is established on the M2M service platform, and the capability field model describes a capability category of each capability in the communication capability, the control capability, and the measurement capability. A described type subentry of a subentry of each capability in the overall capability model is associated with a capability category of a corresponding capability in the capability field model. The query condition includes a capability category of at least one capability in the communication capability, the control capability, and the measurement capability.

An embodiment of the present invention provides an M2M data processing device 04 applied to an M2M device. As shown in FIG. 18, the M2M data processing device 04 includes: a transmitter 041, a receiver 042, and a processor 043. An application program is installed on the M2M device.

The transmitter 041 is configured to send a registration request to an M2M service platform, so that the M2M service platform obtains a filled capability model according to a capability model and capability information of the M2M device after authentication on the registration request succeeds, and updates an overall capability model according to the filled capability model.

The capability model includes three types of capabilities: a communication capability, a control capability, and a measurement capability, and each capability is divided into multiple subentries according to a preset rule; the filled capability model describes at least one subentry corresponding to a communication capability, a control capability, and a measurement capability of the M2M device; and capability information of all registered M2M devices managed by the M2M service platform is recorded in the overall capability model in a type division manner of the capability model.

The transmitter 041 is further configured to send a query condition to the M2M service platform by using the application program, so that the M2M service platform searches the overall capability model according to the query condition, uses a device that meets the query condition as a to-be-queried device, and sends an identifier of the to-be-queried device to the application program.

The processor 043 is configured to select a target M2M device from the device corresponding to the identifier of the to-be-queried device.

The transmitter 041 is further configured to send control information to the M2M service platform, where the control information includes an identifier of the target M2M device and an instruction parameter, so that the M2M service platform queries the at least one data subentry in the control capability in the overall capability model according to the identifier of the target M2M device to obtain a control command corresponding to the target M2M device, generates a target control command according to the instruction parameter and the control command, and sends the target control command to the target M2M device according to the identifier of the target M2M device.

The receiver 042 is configured to receive feedback data sent by the M2M service platform, where after the target M2M device performs an action instructed by the target control command, the feedback data is generated and sent to the M2M service platform.

A type subentry of the communication capability in the overall capability model is a communication type subentry, and at least one data subentry of the communication capability in the overall capability model includes: a communication medium subentry, a communication range subentry, a communication manner subentry, and a communication protocol subentry.

A type subentry of the control capability in the overall capability model is a control type subentry, a data subentry of the control capability in the overall capability model describes control commands corresponding to all the registered M2M devices, and each control command includes next-level subentries such as a command description subentry, a device subentry, a URI subentry, and a parameter subentry.

In conclusion, according to the M2M data processing method provided in this embodiment of the present invention, a capability model includes three types of capabilities: a communication capability, a control capability, and a measurement capability, and each capability is divided into multiple subentries according to a preset rule. Therefore, a filled capability model obtained according to the capability model and capability information of an M2M device is also divided in a type division manner of the capability model; and an overall capability model updated by using the filled capability model is also divided in the type division manner of the capability model. In this case, a query may be performed by the type without massive data queries. Therefore, a query latency and waste of hardware resources of an M2M service platform are reduced.

An embodiment of the present invention provides an M2M data processing system. For a specific structure, reference may be made to FIG. 1, and the M2M data processing system includes: an M2M service platform and an M2M device.

The M2M service platform includes the M2M data processing device shown in FIG. 19 in the embodiments of the present invention.

The M2M device includes the M2M data processing device shown in FIG. 20 in the embodiments of the present invention.

It may be clearly understood by a person skilled in the art that, for the purpose of convenient and brief description, for a detailed working process of the foregoing system, device, and unit, reference may be made to a corresponding process in the foregoing method embodiments, and details are not described herein again.

In the several embodiments provided in this application, it should be understood that the disclosed system, device, and method may be implemented in other manners. For example, the described apparatus embodiment is merely an example. For example, the unit division is merely logical function division and may be other division in actual implementation. For example, multiple units or components may be combined or integrated into another system, or some features may be ignored or not performed. In addition, the displayed or discussed mutual couplings or direct couplings or communication connections may be implemented through some interfaces. The indirect couplings or communication connections between the devices or units may be implemented in electronic, mechanical, or other forms.

The units described as separate parts may or may not be physically separate, and parts displayed as units may or may not be physical units, may be located in one position, or may be distributed on multiple network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of hardware in addition to a software functional unit.

A person of ordinary skill in the art may understand that all or some of the steps of the embodiments may be implemented by hardware or a program instructing related hardware. The program may be stored in a computer-readable storage medium. The storage medium may include: a read-only memory, a magnetic disk, or an optical disc.

## Claims

1. A machine-to-machine, M2M, data processing method performed by an M2M service platform, the method comprising:
• receiving (201) a registration request sent by an M2M device, wherein the registration request comprises a model filling capability identifier and the model filling capability identifier is used to indicate whether the M2M device has a model filling capability,
• after an authentication on the registration request succeeds, determining, according to the model filling capability identifier, whether the M2M device has the model filling capability;
• sending a capability model to the M2M device if the M2M device has the model filling capability, wherein the capability model comprises three types of capabilities: a communication capability, a control capability, and a measurement capability, and each capability is divided into multiple subentries according to a preset rule,
• receiving (202) a filled capability model sent by the M2M device, wherein the filled capability model is the capability model being filled with at least one subentry corresponding to capability information of the M2M device, wherein the capability information comprises a communication capability, a control capability, and a measurement capability of the M2M device,
• updating (203) an overall capability model according to the filled capability model, wherein capability information comprising a communication capability, a control capability and a measurement capability of all registered M2M devices managed by the M2M service platform is recorded in the overall capability model, wherein the overall capability model comprises the three types of capabilities: the communication capability, the control capability, and the measurement capability, and
the communication capability of all devices is recorded as the communication capability of the overall capability model, the control capability of all devices is recorded as the control capability of the overall capability model and the measurement capability of all devices is recorded as the measurement capability of the overall capability.

2. The method according to claim 1, wherein
after the updating the overall capability model, the method further comprises:
receiving a query condition sent by an application program, wherein the application program is installed on the M2M device;
searching the overall capability model according to the query condition, and using a device that meets the query condition as a to-be-queried device; and
sending an identifier of the to-be-queried device to the application program of the M2M device.

3. The method according to claim 2, wherein a subentry of each capability in the communication capability, the control capability, and the measurement capability in the overall capability model comprises a type subentry and at least one data subentry; the type subentry is used to describe a semantic meaning of each capability, and the at least one data subentry is used to describe a practical meaning of each capability; a capability field model is established on the M2M service platform, and the capability field model describes a capability category of each capability in the communication capability, the control capability, and the measurement capability, wherein a described type subentry of a subentry of each capability in the overall capability model is associated with a capability category of a corresponding capability in the capability field model; the query condition comprises a capability category of at least one capability in the communication capability, the control capability, and the measurement capability; and
the searching the overall capability model according to the query condition, and using the device that meets the query condition as the to-be-queried device comprises:
querying, according to the query condition, a capability category that is in the capability field model and indicated by the query condition;
searching, according to the capability category indicated by the query condition, the overall capability model for a type subentry that is associated with the capability category indicated by the query condition, and using the type subentry as a to-be-queried type subentry; and
searching the overall capability model according to the to-be-queried type subentry, and using, as the to-be-queried device, a device on which the to-be-queried type subentry is described.

4. The method according to claim 3, wherein a data subentry in the control capability in the overall capability model describes control commands corresponding to all the registered M2M devices, and after the sending the identifier of the to-be-queried device to the application program, the method further comprises:
receiving control information sent by the application program, wherein the control information comprises an identifier of a target M2M device and an instruction parameter, and the target M2M device is selected by the application program from the device corresponding to the identifier of the to-be-queried device;
querying the at least one data subentry in the control capability in the overall capability model according to the identifier of the target M2M device to obtain a control command corresponding to the target M2M device;
generating a target control command according to the instruction parameter and the control command;
sending the target control command to the target M2M device according to the identifier of the target M2M device, for the target M2M device to perform an action instructed by the target control command and to generate feedback data;
receiving the feedback data sent by the target M2M device; and
sending the feedback data to the application program.

5. The method according to claim 3, wherein
a type subentry of the communication capability in the overall capability model is a communication type subentry, and at least one data subentry of the communication capability in the overall capability model comprises: a communication medium subentry, a communication range subentry, a communication manner subentry, and a communication protocol subentry; and
a type subentry of the control capability in the overall capability model is a control type subentry, a data subentry of the control capability in the overall capability model describes control commands corresponding to all the registered M2M devices, and each control command comprises next-level subentries such as a command description subentry, a method subentry, a uniform resource identifier URI subentry, and a parameter subentry.

6. An M2M data processing method performed by an M2M device, the method comprising:
• sending a registration request to an M2M service platform, for the M2M service platform to obtain, after authentication of the registration request succeeds, a filled capability model according to a capability model and capability information of the M2M device, wherein the registration request comprises a model filling capability identifier and the model filling capability identifier is used to indicate whether the M2M device has a model filling capability,
• if the model filling capability identifier indicates that the M2M device has the model filling capability, receiving a capability model from the M2M service platform, wherein the capability model comprises three types of capabilities: a communication capability, a control capability, and a measurement capability, and each capability is divided into multiple subentries according to a preset rule,
• filling the capability model with at least one subentry corresponding to the capability information of the M2M device to obtain the filled capability model, wherein the capability information comprises a communication capability, a control capability, and a measurement capability of the M2M device, and
• sending the filled capability model to the M2M service platform, for the M2M service platform to record the filled capability model in an overall capability model, and to thereby update the overall capability model according to the filled capability model.

7. The method according to claim 6, wherein an application program is installed on the M2M device; and
after the sending the registration request to the M2M service platform, the method further comprises:
sending a query condition to the M2M service platform by using the application program, for the M2M service platform to search the overall capability model for a to-be-queried device that meets the query condition, and
by the application program, receiving an identifier of the to-be-queried device.

8. An M2M service platform configured to perform any of the methods according to claims 1 - 5.

9. An M2M device configured to perform any of the methods according to claims 6 - 7.

## Patentansprüche

1. Maschine-zu-Maschine-Datenverarbeitungsverfahren bzw. M2M-Datenverarbeitungsverfahren, durchgeführt durch eine M2M-Dienstplattform, wobei das Verfahren Folgendes umfasst:
• Empfangen (201) einer durch eine M2M-Vorrichtung gesendeten Registrierungsanfrage, wobei die Registrierungsanfrage eine Modellfüllfähigkeitskennung umfasst und die Modellfüllfähigkeitskennung verwendet wird zum Angeben, ob die M2M-Vorrichtung eine Modellfüllfähigkeit aufweist,
• nachdem eine Authentifizierung an der Registrierungsanfrage erfolgreich war, Bestimmen, gemäß der Modellfüllfähigkeitskennung, ob die M2M-Vorrichtung die Modellfüllfähigkeit aufweist;
• Senden eines Fähigkeitsmodells an die M2M-Vorrichtung, wenn die M2M-Vorrichtung die Modellfüllfähigkeit aufweist, wobei das Fähigkeitsmodell drei Arten von Fähigkeiten umfasst: eine Kommunikationsfähigkeit, eine Steuerungsfähigkeit und eine Messfähigkeit, und jede Fähigkeit ist gemäß einer voreingestellten Regel in mehrere Untereinträge aufgeteilt,
• Empfangen (202) eines durch die M2M-Vorrichtung gesendeten gefüllten Fähigkeitsmodells, wobei das gefüllte Fähigkeitsmodell das Fähigkeitsmodell ist, das mit mindestens einem Untereintrag gefüllt ist, der Fähigkeitsinformationen der M2M-Vorrichtung entspricht, wobei die Fähigkeitsinformationen eine Kommunikationsfähigkeit, eine Steuerungsfähigkeit und eine Messfähigkeit der M2M-Vorrichtung umfassen,
• Aktualisieren (203) eines Gesamtfähigkeitsmodells gemäß dem gefüllten Fähigkeitsmodell, wobei Fähigkeitsinformationen, die eine Kommunikationsfähigkeit, eine Steuerungsfähigkeit und eine Messfähigkeit aller registrierten M2M-Vorrichtungen, die von der M2M-Dienstplattform gemanagt werden, umfassen, in dem Gesamtfähigkeitsmodell aufgezeichnet sind, wobei das Gesamtfähigkeitsmodell die drei Arten von Fähigkeiten umfasst: die Kommunikationsfähigkeit, die Steuerungsfähigkeit und die Messfähigkeit, und die Kommunikationsfähigkeit aller Vorrichtungen als die Kommunikationsfähigkeit des Gesamtfähigkeitsmodells aufgezeichnet wird, die Steuerungsfähigkeit aller Vorrichtungen als die Steuerungsfähigkeit des Gesamtfähigkeitsmodells aufgezeichnet wird und die Messfähigkeit aller Vorrichtungen als die Messfähigkeit der Gesamtfähigkeit aufgezeichnet wird.

2. Verfahren nach Anspruch 1, wobei das Verfahren,
nachdem das Gesamtfähigkeitsmodell aktualisiert wurde, ferner Folgendes umfasst:
Empfangen einer durch ein Anwendungsprogramm gesendeten Abfragebedingung, wobei das Anwendungsprogramm auf der M2M-Vorrichtung installiert ist;
Durchsuchen des Gesamtfähigkeitsmodells gemäß der Abfragebedingung, und Verwenden einer Vorrichtung, die die Abfragebedingung erfüllt, als die abzufragende Vorrichtung; und
Senden einer Kennung der abzufragenden Vorrichtung an das Anwendungsprogramm der M2M-Vorrichtung.

3. Verfahren nach Anspruch 2, wobei ein Untereintrag von jeder Fähigkeit in der Kommunikationsfähigkeit, der Steuerungsfähigkeit und der Messfähigkeit in dem Gesamtfähigkeitsmodell einen Art-Untereintrag und mindestens einen Daten-Untereintrag umfasst; der Art-Untereintrag verwendet wird zum Beschreiben einer semantischen Bedeutung von jeder Fähigkeit und der mindestens eine Daten-Untereintrag verwendet wird zum Beschreiben einer praktischen Bedeutung von jeder Fähigkeit; ein Fähigkeitsfeldmodell auf der M2M-Dienstplattform erstellt wird und das Fähigkeitsfeldmodell eine Fähigkeitskategorie von jeder Fähigkeit in der Kommunikationsfähigkeit, der Steuerungsfähigkeit und der Messfähigkeit beschreibt, wobei ein beschriebener Art-Untereintrag eines Untereintrags von jeder Fähigkeit in dem Gesamtfähigkeitsmodell mit einer Fähigkeitskategorie einer entsprechenden Fähigkeit in dem Fähigkeitsfeldmodell verknüpft ist; die Abfragebedingung eine Fähigkeitskategorie von mindestens einer Fähigkeit in der Kommunikationsfähigkeit, der Steuerungsfähigkeit und der Messfähigkeit umfasst; und
das Durchsuchen des Gesamtfähigkeitsmodells gemäß der Abfragebedingung, und das Verwenden der Vorrichtung, die die Abfragebedingung erfüllt, als die abzufragende Vorrichtung Folgendes umfasst:
Abfragen, gemäß der Abfragebedingung, einer Fähigkeitskategorie, die sich in dem Fähigkeitsfeldmodell befindet und durch die Abfragebedingung angegeben wird;
Durchsuchen, gemäß der durch die Abfragebedingung angegebenen Fähigkeitskategorie, des Gesamtfähigkeitsmodells nach einem Art-Untereintrag, der mit der durch die Abfragebedingung angegebenen Fähigkeitskategorie verknüpft ist, und Verwenden des Art-Untereintrags als den abzufragenden Art-Untereintrag; und
Durchsuchen des Gesamtfähigkeitsmodells gemäß dem abzufragenden Art-Untereintrag und Verwenden, als die abzufragende Vorrichtung, einer Vorrichtung, auf welcher der abzufragende Art-Untereintrag beschrieben ist.

4. Verfahren nach Anspruch 3, wobei ein Daten-Untereintrag in der Steuerungsfähigkeit in dem Gesamtfähigkeitsmodell Steuerungsbefehle beschreibt, die allen der registrierten M2M-Vorrichtungen entsprechen, und das Verfahren nach dem Senden der Kennung der abzufragenden Vorrichtung an das Anwendungsprogramm ferner Folgendes umfasst:
Empfangen von durch das Anwendungsprogramm gesendeten Steuerungsinformationen, wobei die Steuerungsinformationen eine Kennung einer Ziel-M2M-Vorrichtung und einen Anweisungsparameter umfassen und die Ziel-M2M-Vorrichtung durch das Anwendungsprogramm von der Vorrichtung, die der Kennung der abzufragenden Vorrichtung entspricht, ausgewählt wird;
Abfragen des mindestens einen Daten-Untereintrags in der Steuerungsfähigkeit in dem Gesamtfähigkeitsmodell gemäß der Kennung der Ziel-M2M-Vorrichtung, um einen Steuerungsbefehl, der der Ziel-M2M-Vorrichtung entspricht, zu erhalten;
Erzeugen eines Ziel-Steuerungsbefehls gemäß dem Anweisungsparameter und dem Steuerungsbefehl;
Senden des Ziel-Steuerungsbefehls an die Ziel-M2M-Vorrichtung gemäß der Kennung der Ziel-M2M-Vorrichtung, damit die Ziel-M2M-Vorrichtung eine durch den Ziel-Steuerungsbefehl angewiesene Handlung durchführt und Rückmeldedaten erzeugt;
Empfangen der durch die Ziel-M2M-Vorrichtung gesendeten Rückmeldedaten; und Senden der Rückmeldedaten an das Anwendungsprogramm.

5. Verfahren nach Anspruch 3, wobei
ein Art-Untereintrag der Kommunikationsfähigkeit in dem Gesamtfähigkeitsmodell ein Kommunikationsart-Untereintrag ist und mindestens ein Daten-Untereintrag der Kommunikationsfähigkeit in dem Gesamtfähigkeitsmodell Folgendes umfasst: einen Kommunikationsmedium-Untereintrag, einen Kommunikationsreichweite-Untereintrag, einen Kommunikationsweise-Untereintrag und einen Kommunikationsprotokoll-Untereintrag; und
ein Art-Untereintrag der Steuerungsfähigkeit in dem Gesamtfähigkeitsmodell ein Steuerungsart-Untereintrag ist, ein Daten-Untereintrag der Steuerungsfähigkeit in dem Gesamtfähigkeitsmodell Steuerungsbefehle beschreibt, die allen der registrierten M2M-Vorrichtungen entsprechen, und jeder Steuerungsbefehl Untereinträge einer nächsten Ebene umfasst, wie etwa einen Befehlsbeschreibung-Untereintrag, einen Verfahren-Untereintrag, einen "Uniform Ressource Identifier"-Untereintrag bzw. URI-Untereintrag und einen Parameter-Untereintrag.

6. M2M-Datenverarbeitungsverfahren, durchgeführt durch eine M2M-Vorrichtung, wobei das Verfahren Folgendes umfasst:
• Senden einer Registrierungsanfrage an eine M2M-Dienstplattform, damit die M2M-Dienstplattform, nachdem eine Authentifizierung der Registrierungsanfrage erfolgreich war, ein gefülltes Fähigkeitsmodell gemäß einem Fähigkeitsmodell und Fähigkeitsinformationen der M2M-Vorrichtung erhält, wobei die Registrierungsanfrage eine Modellfüllfähigkeitskennung umfasst und die Modellfüllfähigkeitskennung verwendet wird zum Angeben, ob die M2M-Vorrichtung eine Modellfüllfähigkeit aufweist,
• wenn die Modellfüllfähigkeitskennung angibt, dass die M2M-Vorrichtung die Modellfüllfähigkeit aufweist, Empfangen eines Fähigkeitsmodells von der M2M-Dienstplattform, wobei das Fähigkeitsmodell drei Arten von Fähigkeiten umfasst: eine Kommunikationsfähigkeit, eine Steuerungsfähigkeit und eine Messfähigkeit, und jede Fähigkeit gemäß einer voreingestellten Regel in mehrere Untereinträge aufgeteilt ist,
• Füllen des Fähigkeitsmodells mit mindestens einem Untereintrag, der den Fähigkeitsinformationen der M2M-Vorrichtung entspricht, um das gefüllte Fähigkeitsmodell zu erhalten, wobei die Fähigkeitsinformationen eine Kommunikationsfähigkeit, eine Steuerungsfähigkeit und eine Messfähigkeit der M2M-Vorrichtung umfassen, und
• Senden des gefüllten Fähigkeitsmodells an die M2M-Dienstplattform, damit die M2M-Dienstplattform das gefüllte Fähigkeitsmodell in einem Gesamtfähigkeitsmodell aufzeichnet, und um dadurch das Gesamtfähigkeitsmodell gemäß dem gefüllten Fähigkeitsmodell zu aktualisieren.

7. Verfahren nach Anspruch 6, wobei ein Anwendungsprogramm auf der M2M-Vorrichtung installiert ist; und
das Verfahren, nach dem Senden der Registrierungsanfrage an die M2M-Dienstplattform, ferner Folgendes umfasst:
Senden einer Abfragebedingung an die M2M-Dienstplattform unter Verwendung des Anwendungsprogramms, damit die M2M-Dienstplattform das Gesamtfähigkeitsmodell nach einer abzufragenden Vorrichtung durchsucht, die die Abfragebedingung erfüllt, und
Empfangen, durch das Anwendungsprogramm, einer Kennung der abzufragenden Vorrichtung.

8. M2M-Dienstplattform, ausgelegt zum Durchführen eines der Verfahren nach Ansprüchen 1 - 5.

9. M2M-Vorrichtung, ausgelegt zum Durchführen eines der Verfahren nach Ansprüchen 6-7.

## Revendications

1. Procédé de traitement de données machine-à-machine, M2M, réalisé par une plate-forme de service M2M, le procédé comprenant :
• la réception (201) d'une demande d'enregistrement envoyée par un dispositif M2M, dans lequel la demande d'enregistrement comprend un identifiant de capacité de remplissage de modèle et l'identifiant de capacité de remplissage de modèle est utilisé pour indiquer si le dispositif M2M a ou non une capacité de remplissage de modèle,
• après qu'une authentification sur la demande d'enregistrement a réussi, la détermination, selon l'identifiant de capacité de remplissage de modèle, du fait que le dispositif M2M a ou non la capacité de remplissage de modèle ;
• l'envoi d'un modèle de capacité au dispositif M2M si le dispositif M2M a la capacité de remplissage de modèle, dans lequel le modèle de capacité comprend trois types de capacités : une capacité de communication, une capacité de contrôle, et une capacité de mesure, et chaque capacité est divisée en de multiples sous-entrées selon une règle prédéfinie,
• la réception (202) d'un modèle de capacité rempli envoyé par le dispositif M2M, dans lequel le modèle de capacité rempli est le modèle de capacité rempli avec au moins une sous-entrée correspondant à des informations de capacité du dispositif M2M, dans lequel les informations de capacité comprennent une capacité de communication, une capacité de contrôle, et une capacité de mesure du dispositif M2M,
• la mise à jour (203) d'un modèle de capacité d'ensemble selon le modèle de capacité rempli, dans lequel des informations de capacité comprenant une capacité de communication, une capacité de contrôle et une capacité de mesure de tous les dispositifs M2M enregistrés gérés par la plate-forme de service M2M sont enregistrées dans le modèle de capacité d'ensemble,
dans lequel le modèle de capacité d'ensemble comprend les trois types de capacités :
la capacité de communication, la capacité de contrôle, et la capacité de mesure, et
la capacité de communication de tous les dispositifs est enregistrée en tant que capacité de communication du modèle de capacité d'ensemble, la capacité de contrôle de tous les dispositifs est enregistrée en tant que capacité de contrôle du modèle de capacité d'ensemble et la capacité de mesure de tous les dispositifs est enregistrée en tant que capacité de mesure de la capacité d'ensemble.

2. Procédé selon la revendication 1, après la mise à jour du modèle de capacité d'ensemble, le procédé comprenant en outre :
la réception d'une condition d'interrogation envoyée par un programme d'application, dans lequel le programme d'application est installé sur le dispositif M2M ;
la recherche du modèle de capacité d'ensemble selon la condition d'interrogation, et l'utilisation d'un dispositif qui satisfait à la condition d'interrogation en tant que dispositif destiné à être interrogé ; et
l'envoi d'un identifiant du dispositif destiné à être interrogé au programme d'application du dispositif M2M.

3. Procédé selon la revendication 2, dans lequel une sous-entrée de chaque capacité dans la capacité de communication, la capacité de contrôle, et la capacité de mesure dans le modèle de capacité d'ensemble comprend une sous-entrée de type et au moins une sous-entrée de données ; la sous-entrée de type est utilisée pour décrire une signification sémantique de chaque capacité, et l'au moins une sous-entrée de données est utilisée pour décrire une signification pratique de chaque capacité ; un modèle de champ de capacité est établi sur la plate-forme de service M2M, et le modèle de champ de capacité décrit une catégorie de capacité de chaque capacité dans la capacité de communication, la capacité de contrôle, et la capacité de mesure, dans lequel une sous-entrée de type décrite d'une sous-entrée de chaque capacité dans le modèle de capacité d'ensemble est associée à une catégorie de capacité d'une capacité correspondante dans le modèle de champ de capacité ; la condition d'interrogation comprend une catégorie de capacité d'au moins une capacité dans la capacité de communication, la capacité de contrôle, et la capacité de mesure ; et
la recherche du modèle de capacité d'ensemble selon la condition d'interrogation, et l'utilisation du dispositif qui satisfait à la condition d'interrogation en tant que dispositif destiné à être interrogé comprend :
l'interrogation, selon la condition d'interrogation, d'une catégorie de capacité qui est dans le modèle de champ de capacité et indiquée par la condition d'interrogation ;
la recherche, selon la catégorie de capacité indiquée par la condition d'interrogation, dans le modèle de capacité d'ensemble, d'une sous-entrée de type qui est associée à la catégorie de capacité indiquée par la condition d'interrogation, et l'utilisation de la sous-entrée de type en tant que sous-entrée de type destinée à être interrogée ; et
la recherche du modèle de capacité d'ensemble selon la sous-entrée de type destinée à être interrogée, et l'utilisation, en tant que dispositif destiné à être interrogé, d'un dispositif sur lequel la sous-entrée de type destinée à être interrogée est décrite.

4. Procédé selon la revendication 3, une sous-entrée de données dans la capacité de contrôle dans le modèle de capacité d'ensemble décrivant des commandes de contrôle correspondant à tous les dispositifs M2M enregistrés, et, après l'envoi de l'identifiant du dispositif destiné à être interrogé au programme d'application, le procédé comprenant en outre :
la réception d'informations de contrôle envoyées par le programme d'application, dans lequel les informations de contrôle comprennent un identifiant d'un dispositif M2M cible et un paramètre d'instruction, et le dispositif M2M cible est sélectionné, par le programme d'application, à partir du dispositif correspondant à l'identifiant du dispositif destiné à être interrogé ;
l'interrogation de l'au moins une sous-entrée de données dans la capacité de contrôle dans le modèle de capacité d'ensemble selon l'identifiant du dispositif M2M cible pour obtenir une commande de contrôle correspondant au dispositif M2M cible ;
la génération d'une commande de contrôle cible selon le paramètre d'instruction et la commande de contrôle ;
l'envoi de la commande de contrôle cible au dispositif M2M cible selon l'identifiant du dispositif M2M cible, pour que le dispositif M2M cible réalise une action dont l'instruction a été donnée par la commande de contrôle cible et génère des données en retour ;
la réception des données en retour envoyées par le dispositif M2M cible ; et l'envoi des données en retour au programme d'application.

5. Procédé selon la revendication 3, dans lequel
une sous-entrée de type de la capacité de communication dans le modèle de capacité d'ensemble est une sous-entrée de type de communication, et au moins une sous-entrée de données de la capacité de communication dans le modèle de capacité d'ensemble comprend : une sous-entrée de support de communication, une sous-entrée de portée de communication, une sous-entrée de manière de communication, et une sous-entrée de protocole de communication ;
et
une sous-entrée de type de la capacité de contrôle dans le modèle de capacité d'ensemble est une sous-entrée de type de contrôle, une sous-entrée de données de la capacité de contrôle dans le modèle de capacité d'ensemble décrit des commandes de contrôle correspondant à tous les dispositifs M2M enregistrés, et chaque commande de contrôle comprend des sous-entrées de niveau suivant telles qu'une sous-entrée de description de commande, une sous-entrée de procédé, une sous-entrée d'identifiant de ressource uniforme, URI, et une sous-entrée de paramètre.

6. Procédé de traitement de données M2M réalisé par un dispositif M2M, le procédé comprenant :
• l'envoi d'une demande d'enregistrement à une plate-forme de service M2M, pour que la plate-forme de service M2M obtienne, après que l'authentification de la demande d'enregistrement a réussi, un modèle de capacité rempli selon un modèle de capacité et des informations de capacité du dispositif M2M, dans lequel la demande d'enregistrement comprend un identifiant de capacité de remplissage de modèle et l'identifiant de capacité de remplissage de modèle est utilisé pour indiquer si le dispositif M2M a ou non une capacité de remplissage de modèle,
• si l'identifiant de capacité de remplissage de modèle indique que le dispositif M2M a la capacité de remplissage de modèle, la réception d'un modèle de capacité à partir de la plate-forme de service M2M, dans lequel le modèle de capacité comprend trois types de capacités : une capacité de communication, une capacité de contrôle, et une capacité de mesure, et chaque capacité est divisée en de multiples sous-entrées selon une règle prédéfinie,
• le remplissage du modèle de capacité avec au moins une sous-entrée correspondant aux informations de capacité du dispositif M2M pour obtenir le modèle de capacité rempli, dans lequel les informations de capacité comprennent une capacité de communication, une capacité de contrôle, et une capacité de mesure du dispositif M2M, et
• l'envoi du modèle de capacité rempli à la plate-forme de service M2M, pour que la plate-forme de service M2M enregistre le modèle de capacité rempli dans un modèle de capacité d'ensemble, et pour ainsi mettre à jour le modèle de capacité d'ensemble selon le modèle de capacité rempli.

7. Procédé selon la revendication 6, un programme d'application étant installé sur le dispositif M2M ; et
après l'envoi de la demande d'enregistrement à la plate-forme de service M2M, le procédé comprenant en outre :
l'envoi d'une condition d'interrogation à la plate-forme de service M2M en utilisant le programme d'application, pour que la plate-forme de service M2M recherche, dans le modèle de capacité d'ensemble, un dispositif destiné à être interrogé qui satisfait à la condition d'interrogation, et, par le programme d'application, la réception d'un identifiant du dispositif destiné à être interrogé.

8. Plate-forme de service M2M configurée pour réaliser l'un quelconque des procédés selon les revendications 1 à 5.

9. Dispositif M2M configuré pour réaliser l'un quelconque des procédés selon les revendications 6 et 7.
